**Europäisches Patentamt**

**European Patent Office**

**Office européen des brevets**

(19)

(11) Veröffentlichungsnummer: **0 083 092**
**B1**

(12)

# EUROPÄISCHE PATENTSCHRIFT

(45) Veröffentlichungstag der Patentschrift: .
03.05.89

(51) Int. Cl.⁴: **H 02 B 13/00**, H 02 B 13/02

(21) Anmeldenummer: 82111982.3

(22) Anmeldetag: **23.12.82**

(54) Kapselung einer elektrischen Mittelspannungsschalt- und -verteileranlage.

(30) Priorität: **24.12.81 DE 3151406**

(43) Veröffentlichungstag der Anmeldung:
**06.07.83 Patentblatt 83/27**

(45) Bekanntmachung des Hinweises auf die Patenterteilung:
**03.05.89 Patentblatt 89/18**

(84) Benannte Vertragsstaaten:
**AT CH DE LI NL SE**

(56) Entgegenhaltungen:
**DE-A- 2 804 607**
**FR-A- 1 261 840**

(73) Patentinhaber: **Asea Brown Boveri Aktiengesellschaft,
Kallstadter Strasse 1, D-6800 Mannheim-Käfertal (DE)**

(72) Erfinder: **Krämer, Wilhelm, Hegelstrasse 2,
D-6902 Sandhausen (DE)**

(74) Vertreter: **Rupprecht, Klaus, Dipl.-Ing. et al, c/o Asea
Brown Boveri Aktiengesellschaft Zentralbereich
Patente Postfach 100351, D-6800 Mannheim 1 (DE)**

## Beschreibung

Die Erfindung bezieht sich auf eine Kapselung einer elektrischen Mittelspannungsschalt- und -verteileranlage, welche sich aus mehreren, druckdicht aneinandergefügten, vorzugsweise mit einem Isolierglas angefüllten Isolierstoffteilen zusammensetzt und von einer geschlossenen metallischen Umhüllung umgeben ist.

Bekannt seit vielen Jahren sind gasisolierte Hochspannungsschaltanlagen mit Kapselungen aus Metall und speziellen Isoliergasfüllungen, insbesondere mit $SF_6$-Gas. Erst in jüngster Zeit geht man dazu über, auch sogenannte Mittelspannungsschaltanlagen, d.h. solche mit einem Spannungsbereich bis etwa 36 kV, mit Kapselungen zu versehen, um einen erhöhten Berührungsschutz bei gleichem oder gar verringertem Bauvolumen zu erzielen und auch um spannungsführende Anlagenteile vor unerwünschten Umwelteinflüssen besser zu schützen. Hierfür wurde bereits die Kapselung aus dünnwandigen Blechteilen hergestellt, was allerdings leicht zu Problemen hinsichtlich der Stabilität führen kann, nicht zuletzt auch im Falle des Auftretens eines Störlichtbogens.

Weiterhin ist bekannt, Schaltzellen für Mittelspannungsschaltanlagen mit einer Kapselung aus leitfähigem Kunststoff zu versehen (DE-A-2 824 623). Als Kunststoff ist hierbei insbesondere ein gieß- bzw. spritzfähiger Duro- oder Thermoplast vorgesehen, welcher seine Leitfähigkeit durch Zusätze von Ruß oder Graphit erhält. Außerdem können diese Kapselungteile mit einem leitfähigen Überzug versehen, beispielsweise metallisiert sein. Die Verwendung leitfähiger Kunststoffe und gegebenenfalls deren zusätzliche Metallisierung auf der von außen zugänglichen Seite der Kapselung dient ausschließlich Erdungszwecken. Problematisch bei dieser Kunststoffkapselung dürfte auch wiederum die Störlichtbogenfestigkeit sein, weil im Falle einer Zündung auf die Metallisierung diese nicht in der Lage ist, das Spannungspotential an der Außenhülle niedrig zu halten und zusätzlich die Gefahr besteht, daß der Lichtbogen durch ein entstandenes Loch außen unkontrolliert weiterläuft und gefährliche Beschädigungen an nicht beteiligten Kapselungsteilen hervorruft. Nicht übersehen werden darf außerdem, daß größervolumige Kunststoffteile aus Duroplasten oder auch Thermoplasten in einer den mechanischen Anforderungen hinreichenden Wandstärke und Materialqualität nicht gerade billig sind.

Ein nicht vorveröffentlichter Vorschlag sieht vor, die wesentlichen Kapselungselemente aus einem schäumbaren Isolierstoff geeigneter Festigkeit, insbesondere aus einem harten Strukturschaumstoff wie beispielsweise Polyurethan herzustellen. Derartige Strukturschaumstoffteile sind mit verhältnismäßig wenig Aufwand herstellbar, zudem im Gewicht ausgesprochen leicht und sie weisen dennoch eine hinreichende mechanische Festigkeit auf (DE-A-3 040 350). Auch für diese aus schäumbaren Isolierstoff bestehenden Kapselungsteile ist eine Umhüllung mit metallischen Folien oder eine wenigstens teilweise Umhüllung oder Verkleidung mit dünnwandigen Blechen vorgesehen, und zwar wiederum zu Erdungszwecken. Es hat sich aber erwiesen, daß für die Herstellung geeignete schäumbare Isolierstoffe nicht diffusionsfest sind, d.h. im Laufe einer längeren Zeitspanne würde ein im Kapselungsinneren vorhandenes spezielles Isoliergas (womit also nicht Luft gemeint ist) teilweise austreten und stattdessen ein gewisser Anteil an Wasserdampf in die Kapselung eindringen, womit das Isolationsniveau bereits beeinträchtigt wäre. Die Gefahr, daß der eingedrungene Wasserdampf in nicht vorhersehbarer Weise eine Sättigungsfeuchte bewirkt, so daß es innerhalb der Kapselungen auch zur Wasserkondensatbildung kommen kann, ist umso größer, je höher die relative Feuchte und Temperatur der Außenatmosphäre ist. Zwar ist es möglich, die Kapselungselemente mit Isolierstoffolien, Lacken oder mit Metallbeschichtungen zu umhüllen, doch ist die Gefahr der geminderten Wasserdampfdiffusion und auch die einer Beschädigung immer noch so groß, daß eine Überprüfung der Dichtigkeit auch dann noch in gewissen Abständen erfolgen müßte.

Bekannt ist auch eine Kapselung für Schaltanlagen höherer Spannung, welche sich aus mehreren, druckdicht aneinandergefügten Isolierstoffteilen zusammensetzt und von einem geschlossenen, leitenden Überzug, insbesondere einer metallischen Umhüllung, umgeben ist (FR-A-1 261 840). Diese Umhüllung dient in erster Linie Erdungszwecken. Im übrigen gilt auch hier, daß die Herstellung der Isolierstoffteile aus einem massiven Isolierwerkstoff aufwendig und dennoch nicht ohne weiteres gas- und wasserdampfdicht ist. Über besondere Dichteigenschaften des leitenden Überzuges bzw. der metallischen Umhüllung ist in dieser Veröffentlichung nichts ausgesagt.

Aufgabe der vorliegenden Erfindung ist es, eine gasdichte und diffusionsfeste Kapselung für isolierstoffgekapselte Anlagenteile von elektrischen Mittelspannungsschalt- und -verteileranlagen zu schaffen, welche preiswürdig herzustellen ist, aber dennoch den zu erwartenden mechanischen und elektrischen Belastungen Stand hält, montagefreundlich, wartungsarm und platz- und gewichtssparend und unanfällig gegen die Gefahr der Lichtbogenfußpunktbildung beim Auftreten von Störlichtbögen ist.

Die Lösung dieser Aufgabe wird für eine Kapselung der eingangs genannten Art erfindungsgemäß dadurch erzielt, daß die metallische Umhüllung der Isolierstoffteile aus einstückigen oder zusammengesetzten, beispielsweise halbschalenförmigen Formteilen aus dünnwandigem, ziehfähigem Blech gebildet ist, welche nach erfolgter Montage der Anlage unmittelbar oder unter Zwischenfügung von Dichtmaterialien aneinander stoßen und miteinander derart verbunden werden, daß sie die Isolierstoffteile gemeinsam gas- und wasserdicht umschließen.

Durch die Kombination einer Isolierstoffkapselung mit einer zusätzlichen, gasdicht geschlossenen, dünnwandigen Metallkapselung werden die vorher geschilderten Probleme bei bekannten Kapselungen praktisch vollständig vermieden. Allerdings entsteht zunächst der Eindruck eines großen Aufwandes hinsichtlich der erforderlichen Teile und deren dichter Aneinanderfügung. Dieser Aufwand läßt sich jedoch so weit reduzieren, daß er nicht nur vertretbar erscheint, sondern daß darüber hinaus sogar mitunter wirtschaftliche Vorteile gegenüber bekannten Anlagen und deren Kapselungen zu verzeichnen sind. Eine vorteilhafte Ausgestaltung der Erfindung besteht darin, zur Bildung der metallischen Umhüllung für einzelne Bereiche der Kapselung jeweils zwei gleiche oder zueinander spiegelbildliche halbschalenförmige Blechformteile zusammenzufügen, diese gasdicht miteinander zu verbunden und auf diese Weise Kapselungselemente zu erhalten, welche die unterschiedlichsten Figurationen aufweisen, für den jeweiligen Bedarfsfall ausgewählt und bausteinartig zusammengefügt werden können; den kennzeichnenden Teilen der Ansprüche 2, 3 und 4 sind alle wesentlichen Figurationen oder Ausgestaltungen zu entnehmen. Derartige Teile und Teile-Gruppen können fabrikmäßig vorgefertigt und teilweise auch vormontiert werden und nun am Aufstellungsort der Anlage – wie oben schon gesagt – baukastenartig zusammengefügt werden. Hierfür ist es deshalb auch zweckmäßig, jedem Isolierstoffteil eine gesonderte zusätzliche Metallkapselung zuzuordnen.

Gemäß einer anderen zweckmäßigen Weiterbildung werden die Isolierstoffteile der Kapselung und die diese Teile umgebenden Blechformteile nach Art eines Verbundwerkstoffes wenigstens bereichsweise unlösbar miteinander verbunden. Dies kann beispielsweise durch Kleben oder durch sonstige Einsiegelungsverfahren erfolgen. Die Isolierstoffteile der Kapselung können durch Ausschäumen der einzelnen Blechformteile oder einer vorher gasdicht miteinander verbundenen Gruppe von zwei oder mehreren Blechformteilen mit einem harten Strukturschaumstoff gebildet werden, beispielsweise durch Ausschäumen mit Polyurethan-Integral-Hartschaum. Die Isolierstoffteile können aber auch durch Pulverbeschichtung, Spritzbeschichtung, Tauchharzbeschichtung oder Gießharzbeschichtung der zum Kapselungsinneren weisenden Seiten der einzelnen Blechformteile gebildet beziehungsweise durch eine derartige Behandlung des Inneren einer vorher gasdicht miteinander verbundenen Gruppe von zwei oder mehreren Blechformteilen; die Beschichtungsdicke derart zu behandelnder Blechformteile beträgt vorzugsweise 1,5 bis 5 mm.

Eine andere vorteilhafte Weiterbildung zufolge ist es zur gasdichten Verbindung zweier oder mehrerer, gemeinsam ein Isolierstoffteil umgebender Blechformteile vorgesehen, an deren zueinander gerichteten Blechformkanten flächig aneinanderfügbare Abkantungen oder Bördelungen anzuordnen oder Überlappungen vorzusehen. Die einzelnen Blechformteile werden dabei im Bereich ihrer eben genannten Berührungsstellen miteinander verklebt, verlötet oder verschweißt, wobei beispielsweise Rollnaht- oder Wig-Schweißungen besonders dicht und robust gegen mechanische Verspannungen sein können. Stattdessen ist es aber auch möglich, die Blechformteile im Bereich ihrer Berührungsstellen, vorzugsweise unter Zwischenfügung eines Dichtungsmaterials, welches entweder eingelegt ist oder auch eingeklebt sein kann, miteinander zu verklammern, zu vernieten oder zu verschrauben. Derartige Befestigungsverfahren bieten den Vorteil einer magnetischen Trennung der einzelnen Blechformteile, wenn nämlich als Klammern oder Nieten oder dergleichen Teile solche mit nichtmagnetischen Eigenschaften Verwendung finden und auch die Blechformteile sich nicht unmittelbar berühren.

Andere vorteilhafte Ausgestaltungen des Erfindungsgedankens befassen sich mit der Form der Isolierstoffteile selbst. So können die Isolierstoffteile an ihren an ein benachbartes Isolierstoffteil anzufügenden Öffnungsrändern mit flanschartigen, sich nach außen hin erweiternden kragenartigen Ausformungen zu versehen und hierin einen stufenartigen oder hohlkehlartigen umlaufenden Rücksprung an den äußeren Umlaufkanten vorzusehen, welcher zusammen mit äußeren Rändern zugeordneter Blechformteile eine Einlegenut für ein Dichtungselement bildet. Einer Weiterbildung zufolge ist es vorgesehen, die stufenartigen oder hohlkehlartigen Rücksprünge aneinander stoßender Isolierstoffteile maßlich so aufeinander abzustimmen, daß sie zusammen mit den zueinander gerichteten Rändern zugeordneter Blechformteile einen umlaufenden, wenigstens nahezu geschlossenen Kanal bilden, in welchem ein beiden Isolierstoffteilen gemeinsames Dichtungselement einlegbar ist, welches wiederum seinerseits so in seinem Querschnitt geformt und bemessen ist, daß es sich in montierter Lage der Kapselung dichtend gegen randnahe Flächen beider benachbarter Blechformteile preßt.

Eine ebenfalls zweckmäßige Weiterbildung ist darin zu sehen, die Isolierstoffteile an ihren an ein benachbartes Isolierstoffteil anzufügenden Öffnungsrändern mit senkrecht zur Öffnungsebene vorspringenden Nocken und/oder zurückspringenden Ausnehmungen auszustatten, die so bemessen und gelegen sind, daß in montierter Lage der Isolierstoffteile die Nocken eines der Isolierstoffteile in korrespondierende Ausnehmungen des benachbarten Isolierstoffteiles eindringen und hiermit eine Verdrehsicherung der beiden Isolierstoffteile zueinander bilden. Hierbei können auf dem Umfang der durch die Mittelpunkte der Nocken beziehungsweise Ausnehmungen verlaufenden Teilkreise (ein etwa runder Querschnitt der Isolierstoffteile wird hierbei vorausgesetzt) eine größere Anzahl von Nocken beziehungsweise Ausnehmungen regelmäßig verteilt sein, beispielsweise in Winkelabständen von 15 oder 30 oder 45 Winkelgraden. Auf diese Weise ist eine große Auswahl von unterschiedlichen Winkellagen der einzelnen Isolierstoffteile zueinander geboten.

Als vorteilhaft erweist sich auch eine andere Ausgestaltung, wonach die nach außen hin sich erweitenden flanschartigen Kragen an den Isolierstoffteilen an ihrer vom anzugliedernden benachbarten Isolierstoffteil abgekehrten Flanschseite eine Konizität aufweisen, derart, daß diese Ausformungen einander benachbarter Isolierstoffteile in montierter Lage einen im Querschnitt umlaufenden trapezartigen vorspringenden Rand bilden. Indem man die umlaufenden vorspringenden Ränder einander benachbarter Isolierstoffteile mit Spanngliedern insbesondere in Form von Rohrschellen oder dergleichen umgibt, welche in ihrem Querschnitt wenigstens teilweise dem Querschnittsbild der vorspringenden Ränder angepaßt sind, zusammen also mit entsprechend geformten Spanngliedern, kann durch die vorhin erwähnte Konizität eine besonders innige Aneinanderfügung einander benachbarter Isolierstoffteile erfolgen.

Weitere vorteilhafte Ausgestaltungen und Weiterbildungen können den Unteransprüchen 17 bis 27 sowie den in den Zeichnungen dargestellten Ausführungsbeispielen und der nachfolgenden Beschreibung hierzu entnommen werden.

Die Figuren zeigen im einzelnen:

Fig. 1 einen Kapselungsbereich einer Einspeisung und eines Abganges für eine Mittelspannungsschalt- und -verteileranlage,

Fig. 2 bis 5 in gegenüber Fig. 1 vergrößertem Maßstab einzelne Baugruppen, aus denen sich die Kapselung gemäß Fig. 1 zusammensetzt,

Fig. 6 in stark vereinfachter und auch verkleinerter Darstellungsweise Einzeldarstellungen «a» bis «n» zweckmäßiger Grundformen für bausteinartig zusammenfügbare Bestandteile der Kapselung von Anlagen der zur Rede stehenden Art,

Fig. 7 in Einzeldarstellungen «a» bis «f» fünf halbe Querschnitte und ein vollständiger Querschnitt durch mit Metallkapselungen in Halbschalenbauweise umgebene Isolierstoffteile einer Isolierstoffkapselung,

Fig. 8 und 9 in gegenüber den vorher genannten Darstellungen stark vergrößertem Maßstab gezeigte Längsschnitte durch Stoßstellenbereiche aneinandergefügter Isolierstoffteile sowie deren Abdichtung und Verspannung gegeneinander,

Fig. 10 im Schnitt ein durch eine Kapselungswandung geführtes bewegliches Betätigungsglied und dessen Abdichtung und

Fig. 11 eine in einer Kapselungswandung angeordnete Überdrucksicherung.

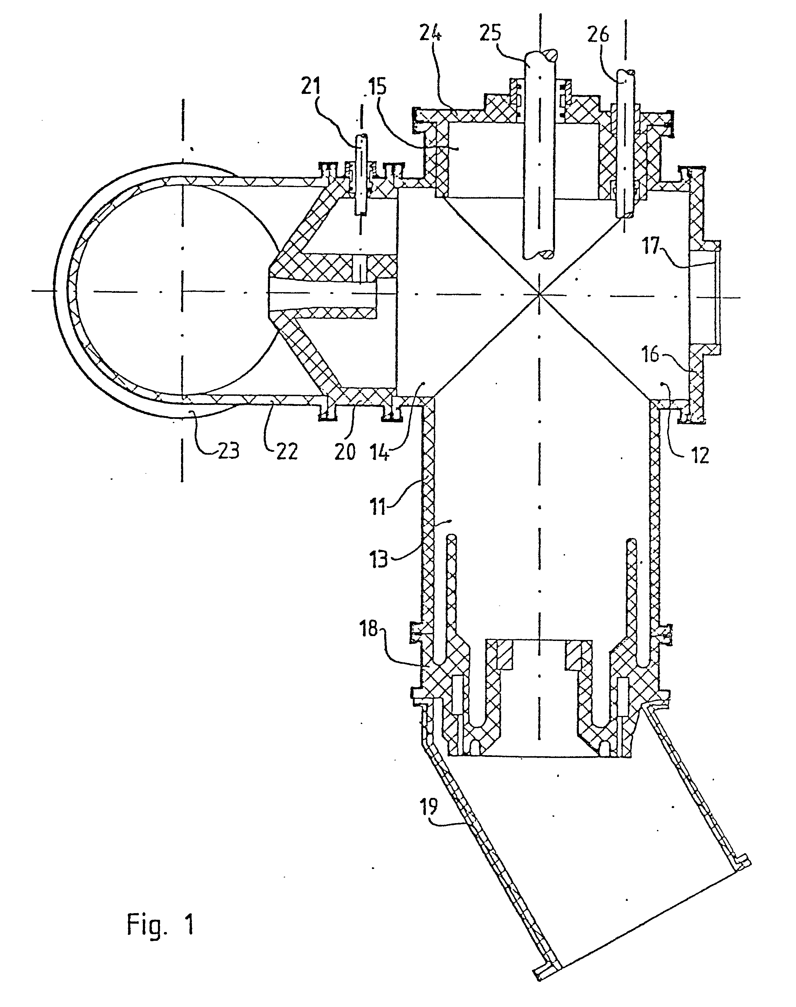

Die Schnittdarstellung in Fig. 1 veranschaulicht einen vergleichsweise kleinen Bereich einer Isolierstoffkapselung, deren Inneres im Betriebszustand mit einem speziellen Isoliergas, beispielsweise mit Schwefelhexafluorid ($SF_6$), mit einem geringen Überdruck gegenüber dem atmosphärischen Druck angefüllt ist. Zu der Problematik der Kapselungen an sich ist bereits eingangs der Beschreibung Stellung genommen worden; es ist auch bereits dargelegt worden, daß die Isolierstoffkapselung mit einer zusätzlichen gasdichten Metallkapselung versehen ist. Vorteilhaft ist es nun, die gesamte Kapselung aus einzelnen Kapselungselementen zusammenzusetzen, was unter anderem die Möglichkeit eröffnet, die Gesamtkapselung individuell den jeweils vorliegenden Bedürfnissen anzupassen. Wie dieses beispielsweise aussehen kann, veranschaulicht also die Fig. 1. Erkennbar hierin ist ein im Querschnitt kreuzförmiges Isolierstoffteil 11 mit insgesamt vier Öffnungsstutzen 12, 13, 14 und 15. Der Öffnungsstutzen 12 ist mittels eines Flanschteiles 16, welches übrigens eine gas- und druckdicht eingebrachte Sichtscheibe 17 aus Panzerglas oder dergleichen enthält, verschlossen. Diese Schichtscheibe 17 bietet, wie schon ihre Bezeichnung aussagt, die Möglichkeit eines Einblickes in das Innere des Isolierstoffteiles 11, beispielsweise um Lage und Zustand bestimmter beweglicher oder verschleißender Teile ohne Öffnung der Kapselung in Augenschein nehmen zu können.

Der Öffnungsstutzen 13 am Isolierstoffteil 11 grenzt an einen Schalteraufnahmestutzen 18, welcher der Aufnahme und Lagerung eines Leistungsschalters dient und hierfür eine speziell dieser Halterung des Schalters angepaßte Formgebung aufweist. An diesen Schalteraufnahmestutzen 18 grenzt schließlich ein Kabelstutzen 19, welcher im Gegensatz zu den übrigen Kapselungselementen an seinem dem Stutzen 18 entgegengesetzten Ende unverschlossen bleibt, d.h. sein Inneres ist mit der freien Atmosphäre verbunden.

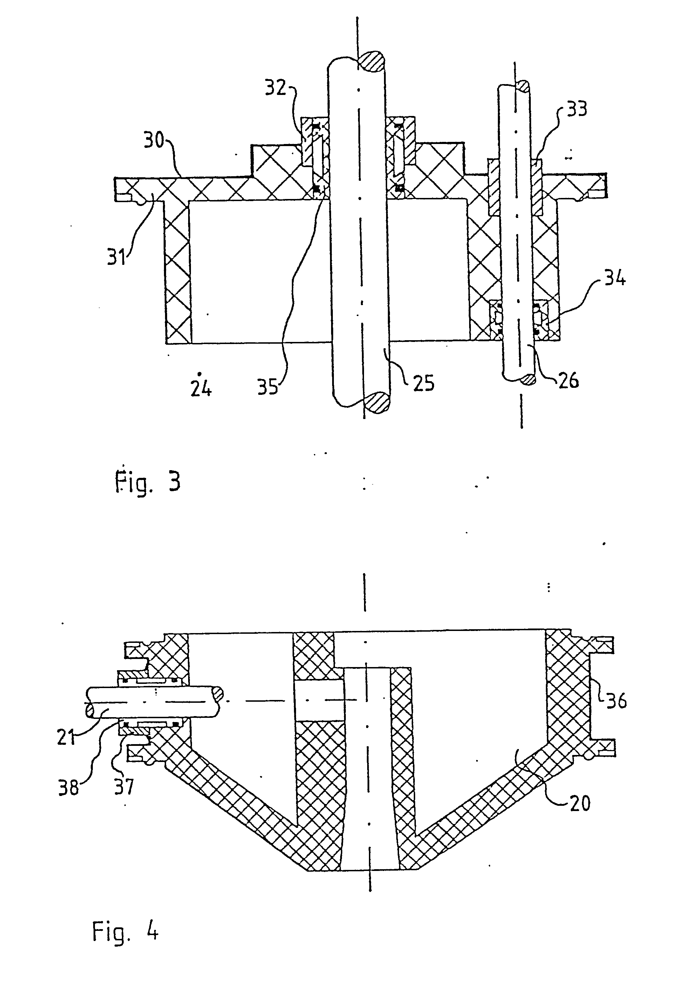

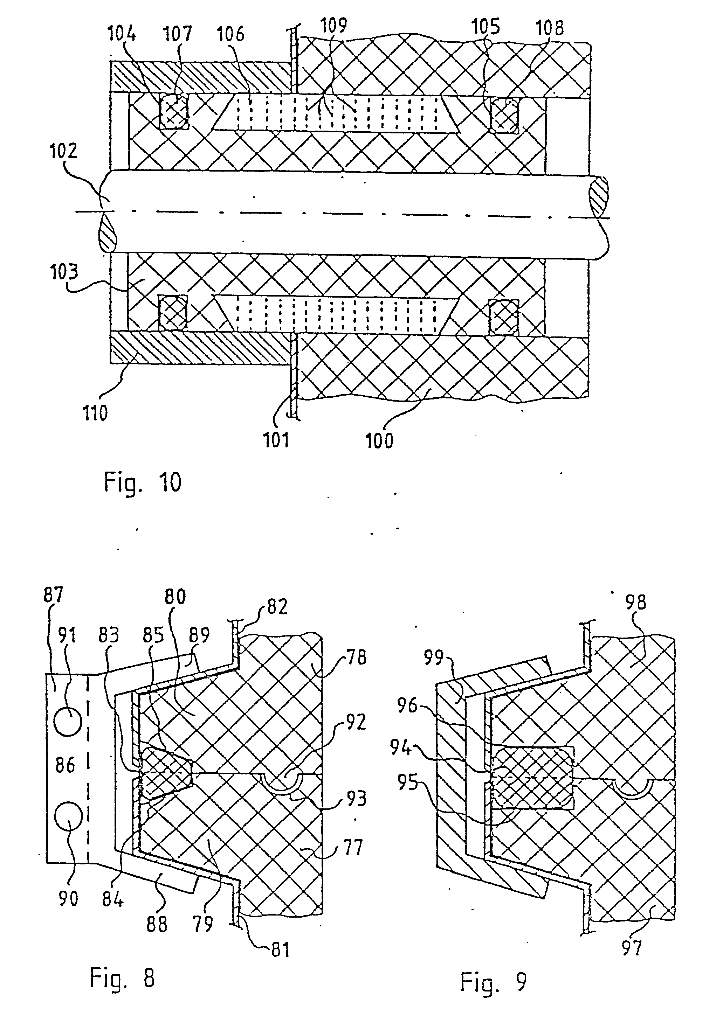

Am Öffnungsstutzen 14 des Isolierstoffteiles 11 ist ein speziell ausgebildeter Lagerstutzen 20 für die Aufnahme und Lagerung eines Trennschalterantriebes angeflanscht. Auf die besondere ausgestaltung einer Durchführungsstelle für ein (an beiden Enden abgebrochen angedeutetes) bewegliches Antriebsglied 21 wird im Zusammenhang mit den Erläuterungen zu den Fig. 4 und 10 noch eingegangen werden. Der Lagerstutzen 20 wiederum ist verbunden mit einem (je nach dem vorliegenden Bedarfsfall) winkeligen, T-förmigen oder auch kreuzförmigen Kapselungselement, nämlich einem angeflanschten Isolierstoffteil 22, welches seinerseits an ein rohrförmiges, der Aufnahme einer Stromsammelschiene dienendes Kapselungselement 23 grenzt.

Der Öffnungsstutzen 15 schließlich nimmt ein Deckelflanschteil 24 auf, welches mit Durchführungen für (ebenfalls abgebrochen angedeutete) Betätigungsglieder 25 und 26 versehen ist.

Wesentlich bei dieser so zusammengefügten Kapselung ist es, daß alle zum Kapselungsinneren weisenden Wandungen aus Isolierstoff bestehen, im vorliegenden Fall aus Polyurethan-Integral-Hartschaum (ausgenommen der Schalteraufnahmestutzen 18), daß aber alle Isolierstoffteile bis auf den besagten Schalteraufnahmestutzen 18 nach außen hin eine gasdicht geschlossene zusätzliche Metallkapselung aufweisen. Dieses ist auch an den Stoßstellen, an denen die einzelnen Isolierstoffteile aneinandergefügt sind, der Fall. Einzelheiten zur Verbindungs- und Abdichtungstechnik an diesen Stoßstellen werden anhand der Erläuterungen zu den Fig. 8 und 9 dargelegt. Wie soeben bereits angedeutet, bildet der Schalteraufnahmestutzen 18, was dessen Isoliermaterial betrifft, eine Ausnahme, denn er besteht aus diffusionsfestem Kunststoffmaterial, wodurch eine Gasdiffusion zum einendig offenen Kabelstutzen 19 verhindert wird.

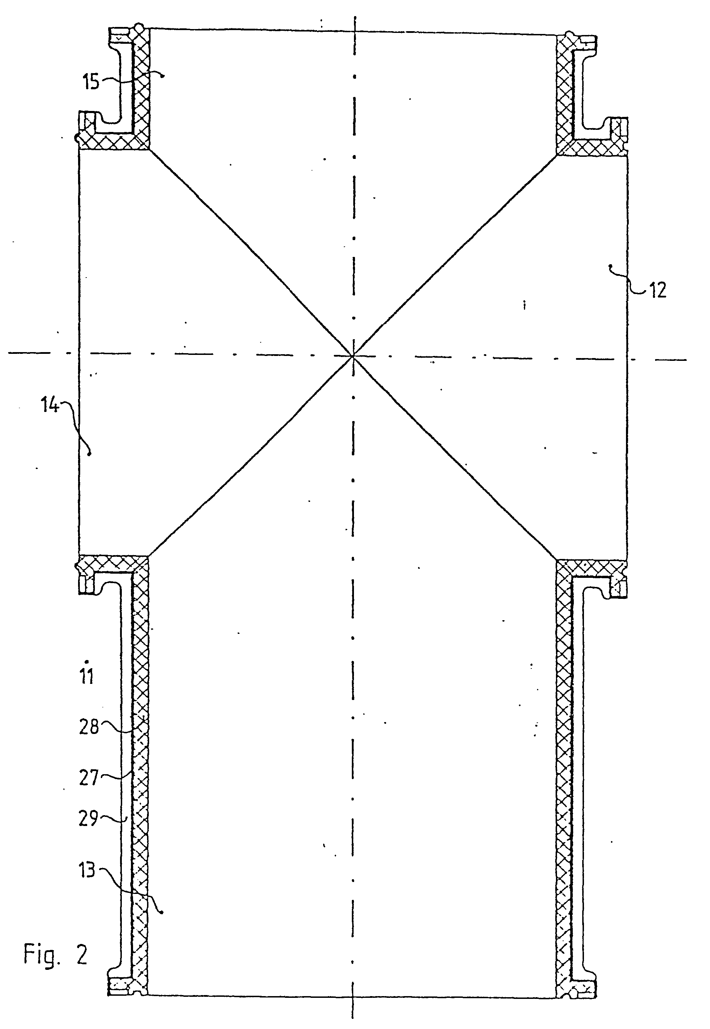

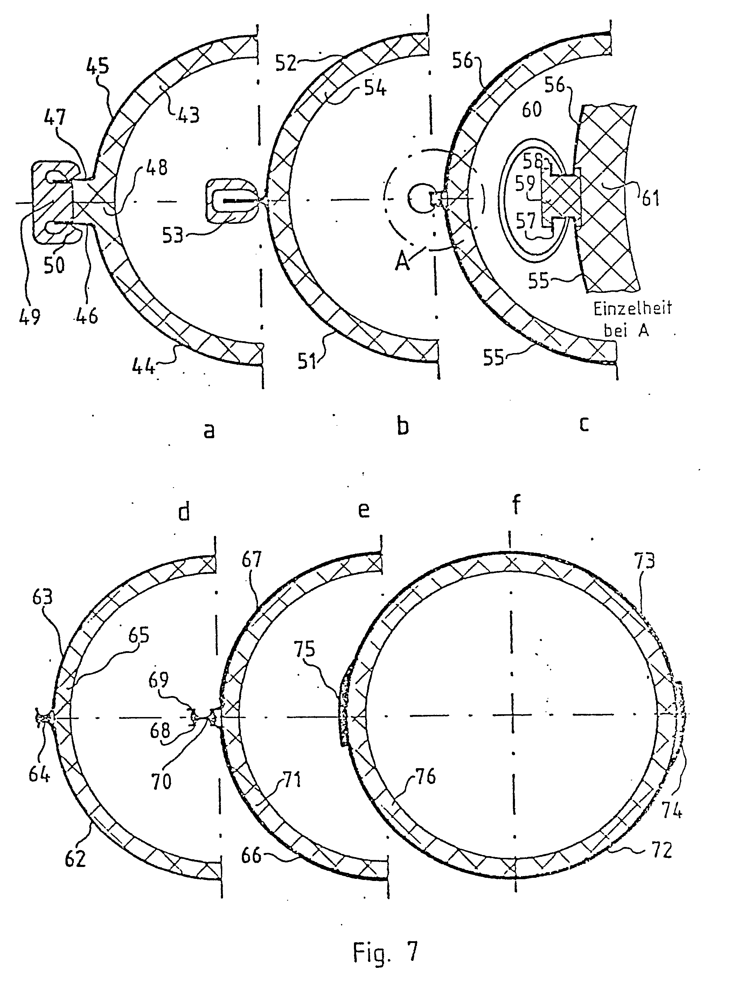

Einzelheiten zur Herstellungs- und Verbindungstechnik der einzelnen Isolierstoffteile und ihrer metallischen Kapselungen sollen anhand der nachfolgend zu beschreibenden Figuren erläutert werden. Die Fig. 2 veranschaulicht – in gegenüber der Fig. 1 vergrößertem Maßstab – noch einmal das Isolierstoffteil 11 mit seinen Öffnungsstutzen 12, 13, 14 und 15. Das komplette Isolierstoffteil 11 setzt sich zusammen aus entsprechend gezogenen Blechformteilen in Halbschalenform, von denen in der Schnittdarstellung in Fig. 2 lediglich eines, nämlich das Blechformteil 27 erkennbar ist, und zwar ist es angedeutet durch eine hervorgehoben dicke Strichführung entlang der Außenkanten der kreuzschraffiert angedeuteten Kunststoffwandungen 28. An dieser Stelle sei noch angedeutet, daß die beiden genannten halbschalenförmigen Blechformteile 27 an ihren zueinander gerichteten Kanten mit flächigen Abkantungen 29 versehen sind, welche der gasdichten Zusammenfügung der beiden Blechformteile dienen; eingehendere Erläuterungen hierzu werden im Zusammenhang mit der Beschreibung der Ausführungsmöglichkeiten gemäß Fig. 7 gegeben. Nach der Zusammenfügung der beiden Blechformteile 27 werden diese mit dem bereits genannten Hartschaumstoff ausgeschäumt, wodurch erst das eigentliche Isolierstoffteil gebildet wird. Anstatt einer Ausschäumung kann aber auch ein entsprechend geformtes Isolierstoffteil gesondert hergestellt und zwischen die Blechformteile eingelegt werden, welche in diesem Fall erst nach dem Einlegen des Isolierstoffteiles gasdicht miteinander verbunden werden. An den Stutzenenden weist das Isolierstoffteil, gleichgültig ob es nun durch Ausschäumen hergestellt worden ist oder als gesondertes Teil anfällt, spezielle Ausformungen auf, auf welche in den Erläuterungen zu den Fig. 8 und 9 eingegangen wird.

Fig. 3 veranschaulicht – ebenfalls in gegenüber Fig. 1 vergrößerter Darstellung – das bereits genannte Deckelflanschteil 24 mit den ebenfalls schon erwähnten, abgebrochen dargestellten Betätigungsgliedern 25 und 26. Das Deckelflanschteil 24 besteht, wie auch das vorher beschriebene Isolierstoffteil 11, aus Polyurethan-Integral-Hartschaum und weist auf seiner in montierter Lage zur freien Atmosphäre hin gerichteten Wandung eine zusätzliche Metallkapselung 30 auf, welche auch hier durch eine dickere Strichführung angedeutet ist. Diese Metallkapselung 30 ist im Bereich der äußeren Flanschwandung 31 des Deckelflanschteiles 24 umgebördelt und stößt – in montierter Lage – an oder nahezu an das Blechformteil 27 des kreuzförmigen Isolierstoffteiles 11. Im Bereich der Betätigungsglieder 25 und 26 hingegen grenzt die Metallkapselung 30 an metallische Lager- und Führungsglieder 32 und 33 und ist mit diesen gasdicht verbunden, d.h. beispielsweise verschweißt oder verlötet oder stattdessen druckdicht verklebt oder verkittet. Zur Lagerung und Führung der Betätigungsglieder 25 und 26 ist noch zu erwähnen, daß das metallische Lager- und Führungsglied 32 unmittelbar in die Abdichtungsmaßnahmen für das Betätigungsglied 25 mit einbezogen ist, das Lager- und Führungsglied 33 hingegen dient ausschließlich der Lagerung und Führung des Betätigungsgliedes 26 und grenzt an eine Abdichtungsstelle 34. Diese Abdichtungsstelle 34 sowie auch diejenige für das Betätigungsglied 25, welche mit der Ziffer 35 versehen ist, gleichen im Funktionsprinzip einander und entsprechen auch derjenigen Abdichtungsstelle, welche dem bereits vorhin erwähnten beweglichen Antriebsglied 21 zugeordnet ist. Aufbau und Wirkungsweise dieser Abdichtungsstellen sollen – wie es bereits erwähnt wurde – anhand der Fig. 10 erklärt werden.

Die Fig. 4 zeigt den Lagerstutzen 20, welcher ebenfalls in demjenigen Bereich, in welchem er – in montierter Lage – mit der freien Atmosphäre in Berührung kommt, mit einer zusätzlichen Metallkapselung 36 versehen ist. Diese Metallkapselung 36 ist für die Durchführung des vorher schon erwähnten beweglichen Antriebsgliedes 21 durchbrochen und grenzt hier gasdicht an eine Führungshülse 37. Die Ausbildung auch dieser mit der Ziffer 38 versehenen Abdichtungsstelle gleicht im Prinzip derjenigen in der Fig. 10.

Im Unterschied zu den vorher erläuterten Isolierstoffteilen 11, 16, 18, 24 bildet dieser Lagerstutzen 20 nicht gleichzeitig ein Verschlußteil für das Kapselungsinnere, sondern lediglich ein Zwischenglied, welches an seinen beiden Endbereichen mit anderen Kapselungsgliedern zu verbinden ist.

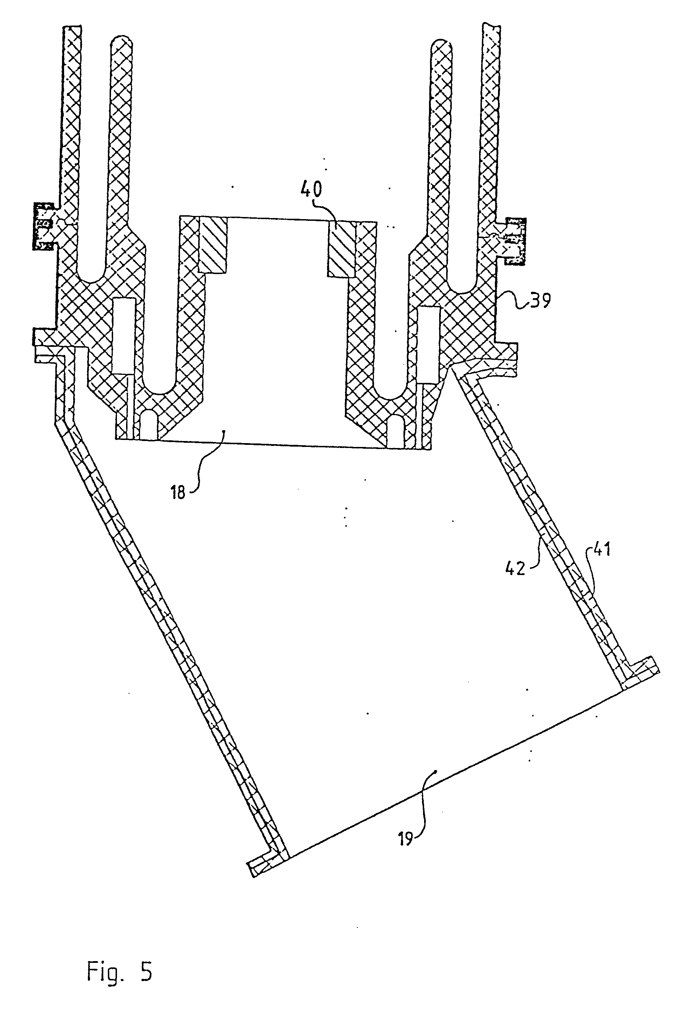

Die Fig. 5 stellt den Schalteraufnahmestutzen 18 mit dem daran angeflanschten Kabelstutzen 19 dar. Auch dieser Schalteraufnahmestutzen 18 ist in seinem Umfangsbereich mit einer Metallkapselung 39 versehen, er besteht aber, wie schon ausgeführt worden ist, nicht aus Polyurethan-Integral-Hartschaum, sondern aus einem diffusionsfesten Kunststoff, beispielsweise Epoxydharz. In dieses Material ist auch noch ein metallischer Ring 40 eingebettet, der zur Aufnahme und präzisen Halterung eines Leistungsschalters dient.

Der Kabelstutzen 19 dient, wie bereits ausgeführt worden ist, nicht mehr unmittelbar der Kapselung, sondern vielmehr als Abdeckung und Berührungsschutz für eine Kabelanschlußstelle. Im dargestellten Falle ist er doppelschichtig ausgeführt, d.h. eine äußere Mantelschicht 41 besteht aus einem schlagfesten Kunststoff, die Innenschicht 42 hingegen wird von einem ausgeschäumten Kunststoff gebildet. Stattdessen kann auch eine beidseitige Kunststoffbeschichtung eines dünnen Metallmantels durch Tauchen in ein Tauchharz erfolgen und so der Kabelstutzen 19 gebildet werden.

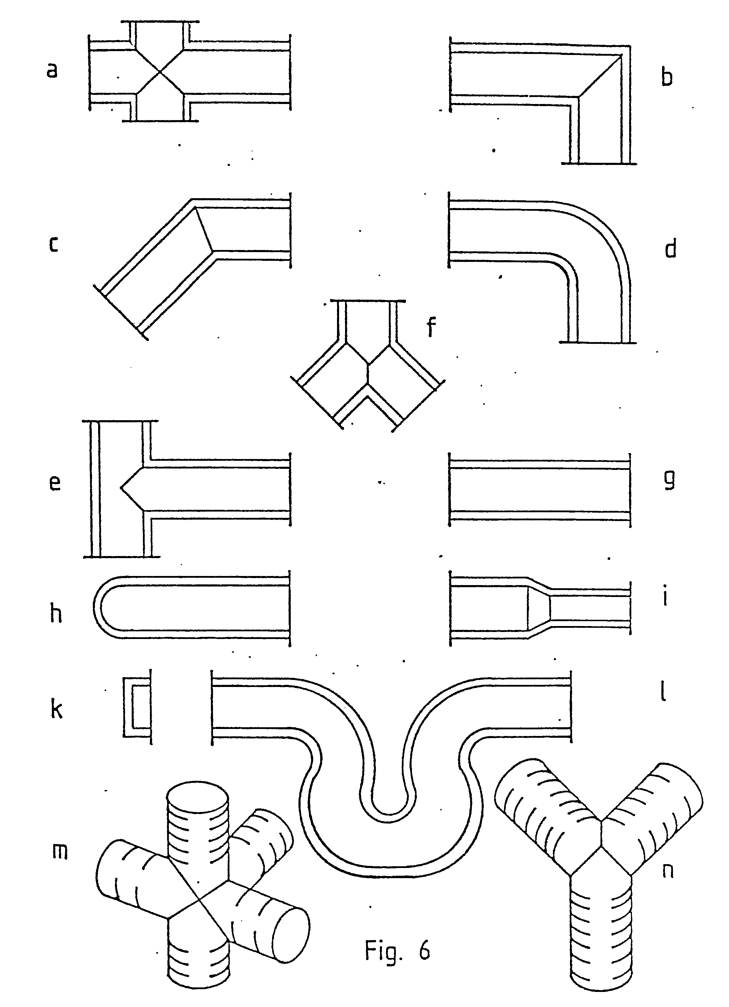

Aus dem bisher Gesagten kann entnommen werden, daß zur Bildung einer Isolierstoffkapselung unterschiedliche, mit zusätzlichen Metallkapselungen versehene Isolierstoffteile Verwendung finden, und zwar auf der einen Seite solche, welche ganz bestimmte zusätzliche Ausformungen für beispielsweise Durchführungen von beweglichen Teilen oder die Halterung von Schaltern oder deren Antriebe enthalten müssen, andererseits aber werden auch Isolierstoffteile ohne besondere Ausformungen benötigt, beispielsweise zur Kapselung von Stromsammelschienen oder Abzweigleitungen und dergleichen. Für den letztgenannten Bedarfsfall ist es zweckmäßig, über ein Sortiment fabrikmäßig vorgefertigter Kapselungsglieder zu verfügen, welche dann nach Art eines Baukastensystems individuell je nach dem Bedarfsfall geplant und zusammengefügt werden können. Hierbei infrage kommende Grundformen zeigt die Fig. 6, wobei die Darstellungen weitgehend vereinfacht sind. Die Einzeldarstellungen seien nachfolgend kurz aufgezählt, und zwar zeigt

die Darstellung a: ein Kreuzstück, ähnlich demjenigen in der Fig. 2,

die Darstellung b: ein Winkelstück,

die Darstellung c: ein stumpfwinkliges Kapselungselement,

die Darstellung d: ein Bogenelement,

die Darstellung e: ein T-förmiges Element,

die Darstellung f: ein hosenrohrförmiges Element,

die Darstellung g: ein einfaches rohrförmiges Element,

die Darstellung h: ein kappenförmiges (also einendig verschlossenes) Element,

die Darstellung j: ein rohrförmiges, in seinem Längsverlauf jedoch konisch verjüngtes Element,

die Darstellung k: ein Verschlußdeckel-Element, ähnlich dem Flanschteil 16 in der Fig. 1, jedoch ohne Sichtscheibe,

die Darstellung l: ein Omega-förmiges, beispielsweise als Dehnglied verwendbares Element,

die Darstellung m: ein kreuznagelförmiges Element und

die Darstellung n: ein dreischenkliges Winkelelement, dessen einzelne Schenkel stets in einem rechten Winkel zum benachbarten Schenkel stehen.

Bei den beiden letztgenannten, mit den Indizes «m» und «n» bezeichneten Grundformen handelt es sich um wahrscheinlich nur sehr selten benötigte Teile, dennoch sind aber auch solche Grundformen in gewissen sehr verzweigten Kapselungen denkbar und vorteilhaft.

Wie bereits ausgeführt worden ist, empfiehlt sich für die Herstellung der einzelnen Kapselungselemente die Bildung von metallischen Halbschalen, welche gasdicht zusammengefügt und anschließend ausgeschäumt werden, oder stattdessen mit vorgefertigten Isolierstoffteilen bestückt werden. Die Halbschalen werden entweder vor dem Ausschäumen oder nach ihrer Bestückung mit Isolierstoffteilen gasdicht miteinander verbunden. Vorteilhafte Möglichkeiten dieser gasdichten Verbindung der einzelnen Halbschalen veranschaulicht die Fig. 7, in welcher in mehreren Einzeldarstellungen unterschiedliche Verbindungstechniken gezeigt werden. Die Einzeldarstellung «a» zeigt einen (halben, d.h. nur bis zur Symmetrieachse reichenden) Querschnitt durch ein Isolierstoffteil 43, welches von Halbschalen 44

und 45 aus einem Stahlblech umgeben ist. Diese Halbschalen 44 und 45 sind mit flächig zueinander weisenden, jedoch nicht aneinander liegenden Abkantungen 46 und 47 versehen, zwischen denen sich in einem gewissen Flächenbereich eine Ausformung 48 am Isolierstoffteil 43 und im übrigen Flächenbereich ein Mittelschenkel 49 einer Klammer 50 einfügen. Eine derartige konstruktive Ausgestaltung empfiehlt sich insbesondere dann, wenn die Halbschalen 44, 45 aus magnetisierbaren Metallblechen bestehen. Auf diese Weise wird eine Minderung des magnetischen Leitvermögens erzielt, wobei vorausgesetzt wird, daß auch die Klammer 50 aus nicht magnetisierbarem Material, sondern beispielsweise aus einem hochfesten Kunststoff, besteht. Zur tatsächlich gasdichten Zusammenfügung der beiden Halbschalen 44 und 45 empfiehlt sich das Einlegen eine (nicht im einzelnen dargestellten) Dichtmaterials in Form einer Dichtung oder einer Klebmasse zwischen die Ausformung 48 am Isolierstoffteil 43 und die angrenzenden Abkantungen 46 und 47 sowie die diesen Abkantungen zugekehrten Seiten des Mittelschenkel 49 der Kammer 50.

Die Einzeldarstellung «b» veranschaulicht eine Abwandlung der eben beschriebenen Konstruktion, hier nämlich liegen die (nicht bezifferten) Abkantungen von metallenen Halbschalen 51 und 52 unter Zwischenfügung eines dünnen (nicht gezeigten) Dichtungsmaterials oder Dichtungsfilmes praktisch unmittelbar aufeinander; ein Klammerteil 53 preßt die genannten Abkantungen der Halbschalen 51 und 52 gasdicht aufeinander. Ein zwischen den Halbschalen 51 und 52 aufgenommenes Isolierstoffteil 54 weist dementsprechend keine zusätzlichen, nach außen hin ragenden Ausformungen auf.

Eine noch anders geartete Ausführungsmöglichkeit veranschaulicht die Einzeldarstellung «c». Zur Verdeutlichung der Gestaltung der Stoßstelle zweier metallischer Halbschalen 55 und 56 ist diese vergrößert in einer Einzelheit «A» dargestellt. Es ist erkennbar, daß die zueinander gerichteten Kantenbereiche der Halbschalen 55 und 56 U-förmige Umbördelungen 57 und 58 aufweisen, zwischen denen ein im Querschnitt etwa H-förmiges Dichtelement 59 so angeordnet ist, daß sich die Umbördelungen 57 und 58 in die nutartigen Ausnehmungen des Dichtelementes 59 einfügen. Ein Klammerteil 60, dessen freie Enden sich in die gebildeten Nuten der Umbördelungen 57 und 58 einlegen, preßt die genannten Kantenbereiche der Halbschalen 55 und 56 zueinander und schafft somit eine abgedichtete Verbindung beider Halbschalen. Ein von diesen Halbschalen 55 und 56 eingeschlossenes Isolierstoffteil 61 ist anschließend an diesen Abdichtvorgang durch Ausschäumen hergestellt; stattdessen könnte aber auch ein vorgefertigtes Isolierstoffteil vor dem Zusammenfügen der Halbschalen 55 und 56 eingelegt werden. Zum Zusammenklammern der Halbschalen 55 und 56 können übrigens entweder mehrere aus einem Federband oder aus einem entsprechend bemessenen Federdraht bestehende einzelne Klammerteile 60 Verwendung finden, welche in gewissen Abständen nebeneinander angeordnet sind, stattdessen kann aber auch ein entsprechend aufgeschlitztes Rohrstück als Klammerteil Verwendung finden.

Die Einzeldarstellung «d» in der Fig. 7 zeigt eine verhältnismäßig einfache Ausführungsform, bei welcher die zueinanderweisenden Kanten von Halbschalen 62 und 63 dachrinnenartig umgebördelt bzw. ausgebogen und anschließend miteinander verlötet sind, wodurch sich eine durchgehende, gasdichte Lötstelle 64 bildet. Auch diese Halbschalen 62 und 63 umschließen einen Isolierstoffkörper 65, welcher bereits in geschilderter Art und Weise gebildet ist.

Ganz ähnlich der letztgenannten Ausführungsmöglichkeit ist diejenige in der Einzeldarstellung «e» ausgebildet, hier nämlich sind zueinander gerichtete Kanten von Halbschalen 66 und 67 so abgekantet, daß sie zunächst flächig aneinanderliegende Laschen 68 und 69 bilden, welche sodann durch eine Rollnahtschweißung an der angedeuteten Schweißstelle 70 miteinander verschmolzen, d.h. also ohne Zusatzwerkstoff miteinander verschweißt werden. Auch diese Halbschalen 66 und 67 umschließen in bereits geschilderter Art einen Isolierstoffkörper 71.

Bei der Ausbildungsform gemäß der Einzeldarstellung «f» werden die zueinandergerichteten Enden von Halbschalen 72 und 73 überlappt, wobei jeweils eine der Überlappungsflächen einer jeden Halbschale eine Auskragung 74 bzw. 75 um jeweils etwa die Materialstärke aufweist. Auf diese Weise kann eine im Querschnitt kreisförmige Metallkapselung gebildet werden. Stattdessen kann man aber auch auf die Auskragungen 74, 75 verzichten und die entsprechenden Bereiche einfach aneinanderfügen, wodurch sich eine geringfügige Verschiebung der Mittelpunkte (nämlich um etwa die Wandstärke der Blechkapselung) der einzelnen Halbschalen 72, 73 zueinander ergibt, was aber bedeutungslos bleibt, da die Wandstärke nur einen ganz kleinen Bruchteil des Durchmessers der Kapselung ausmacht und somit die Mittelpunktsverschiebung praktisch nicht ins Gewicht fällt. Die überlappten Bereiche können miteinander verlötet oder verschweißt (z.B. rollnahtverschweißt) oder auch miteinander gasdicht verklebt werden. Denkbar ist auch eine Kombination von beispielsweise Schweißvorgängen (in Form von Punkt-Schweißungen) und einer Klebung. Auch in eine derartig gebildete verschlossene Metallkapselung ist ein Isolierkörper 76 in geschilderter Weise einschäumbar oder einlegbar.

Die Ausführungsbeispiele können mit entsprechenden Vorrichtungen – auf einfache Weise realisiert werden. Je nach Blechstärke und Materialart und schließlich auch je nach der anfallenden Stückzahl können aber auch andere Ausgestaltungen zweckmäßig sein, beispielsweise solche, wie sie bei der Konservendosenherstellung gebräuchlich sind.

Die in den Fig. 2 bis 7 gezeigten und soeben erläuterten Ausführungsbeispiele befassen sich ausnahmslos mit der Herstellung und Ausbildung einzelner Kapselungselemente. Diese aber müssen bei der Installation einer gekapselten Anlage auch noch gasdicht miteinander verbunden werden. Ausführungsmöglichkeiten hierfür sind den Fig. 8 und 9 zu entnehmen. So zeigt die Fig. 8 in vergrößertem Maßstab einen Querschnitt durch die Ränder zweier aneinander stoßender Isolierstoffkörper 77 und 78, welche sich, wie ersichtlich, an ihren Öffnungen flanschartig erweitern, d.h. sie weisen jeweils einen umlaufenden Kragen 79 beziehungsweise 80 auf. Die den Isolierstoffteilen 77 und 78 zugeordneten metallischen Kapselungen 81 und 82 sind diesen Kragen angepaßt und umgeben sie bis nahezu zur Stoßstelle 83 hin. Diese Kragen 79 und 80 weisen an ihren zueinandergerichteten Außenkanten stufenartige Rücksprünge 84 und 85 auf, welche zusammen mit den angrenzenden äußeren Randbereichen der zugeordneten Kapselungen 81 und 82 Einlegenuten bilden, die in montierter Lage zweier benachbarter Isolierstoffteile 77, 78 einen nahezu geschlossenen Kanal bilden. In diesem Kanal ist nun ein umlaufendes Dichtungselement 86 angeordnet, welches in der (dargestellten) Montagelage sich sowohl an die Ränder der Kapselungen 81 und 82 dichtend anlegt, als auch an die Wandungen der stufenartigen Rücksprünge 84 und 85.

Der Zusammenhalt der Isolierstoffteile 77 und 78 mitsamt deren metallischen Kapselungen 81 und 82 erfolgt durch eine zwei- oder mehrteilige Spannschelle 87 mit einem etwa U-förmigen Querschnitt, wobei sich Schenkel 88 und 89 der Spannschelle 87 in ihrem Verlauf den Schrägen der Kragen 79 und 80 beziehungsweise den daran angepaßten metallischen Kapselungen 81 und 82 anpassen. Beim Zusammenspannen der Spannschelle 87 (beispielsweise mittels Schraubelementen, welche in die angedeuteten Gewindebohrungen 90 und 91 einschraubbar sind) werden infolge der Konizitäten die Isolierstoffteile 77 und 78 aufeinander gepreßt und gleichzeitig das Dichtelement 86 noch fester an die vorhin erwähnten Wandungsbereiche angepreßt. Somit ist auch eine gasdichte Kapselung an den Stoßstellen 83 einzelner Kapselungselemente mit hinreichender Sicherheit gewährleistet. Erwähnt sei noch ein aus der Teilungsebene vorspringender Nocken 92 am Isolierstoffteil 78, welcher in eine Ausnehmung 93 am Isolierstoffteil 77 hineinragt. Diese Ausbildungen, von denen übrigens auf dem Umfang mehrere angeordnet sein können, dienen der Zentrierung und Verdrehsicherung der einzelnen Isolierstoffteile gegeneinander. Bei Isolierstoffkapselungen mit kreisförmigen Öffnungsrändern kann man beispielsweise eine größere Anzahl von Nocken beziehungsweise Ausnehmungen auf dem Umfang verteilen, so daß ein Zusammenfügen der Isolierstoffteile in allen erdenklichen Winkellagen zueinander, jeweils um 15 oder 30 oder 45 Winkelgrade gestuft, erfolgen kann. Ein solches winkelversetztes Zusammenfügen von einander benachbarten Kapselungselementen kommt insbesondere bei Verwendung von nicht linearen Kapselungselementen infrage, oder bei solchen mit seitlichen Abgängen, siehe hierzu Fig. 6, alle Ausführungsformen, ausgenommen diejenigen gemäß «g», «h» und «j».

Fig. 9 zeigt einen gleichen Schnitt wie die Fig. 8; einziger wesentlicher Unterschied ist der, daß hier ein Dichtelement 94 mit im wesentlichen rechteckigem Querschnitt Verwendung findet anstatt eines solchen mit einer Trapezform, wie dieses in der Fig. 8 gezeigt ist. Dementsprechend sind auch stufenartige Rücksprünge 95 und 96 in den angedeuteten Isolierstoffteilen 97 und 98 dieser Formgebung des Dichtelementes 94 angepaßt. Die in dieser Darstellung erkennbare Spannschelle 29 entspricht derjenigen 87 in Fig. 8, sie ist jedoch in geschnittener Lage gezeigt, wohingegen die Darstellung in Fig. 8 einen Endbereich einer derartigen Spannschelle zeigt.

Die Fig. 10 veranschaulicht in gegenüber den Fig. 1 bis 5 und 7 vergrößertem Maßstab eine Durchtrittsstelle durch eine Isolierstoffkapselung 100 mit zusätzlicher Metallkapselung 101 für ein bewegliches Glied 102, beispielsweise ein Betätigungsglied. Dieses bewegliche Glied 102 ist starr und auch gasdicht verbunden mit einem Führungskolben 103. Dieser Führungskolben 103 weist an seinen Längsendbereichen umlaufende, vergleichsweise schmale Nuten 104 und 105 auf, in seinem Mittenbereich hingegen eine breite, im Querschnitt trapezförmige Nut 106. Wie aus der Darstellung erkennbar, sind in den schmalen Nuten 104 und 105 O-Ring-Dichtelemente 107 und 108 untergebracht, welche abriebfest und gleichzeitig in der Qualität öl- und fettbeständig sind. Die breite, im Querschnitt trapezförmige Nut 106 ist mit einem Flüssigdichtmittel 109 angefüllt, beispielsweise mit einem dickflüssigen, für den speziellen Bedarfsfall geeigneten Öl oder einem speziellen weichen Fett oder Gel. Der Führungskolben 103 grenzt an seinem äußeren Umfang auf seiner in der Figur nach rechts weisenden Seite unmittelbar an die Isolierstoffkapselung 100 (es wäre auch denkbar, die Isolierstoffkapselung 100 an dieser Stelle mit einer Kunststoff-Auskleidung in Form einer Buchse oder dergleichen zu versehen), in seinem Mittenbereich durchdringt er die Metallkapselung 101, ohne allerdings unmittelbar an diese grenzen zu müssen, und in seinem linken Endbereich an ein innenzylindrisches Führungsteil 110, welches mit der Metallkapselung 101 gasdicht verschweißt, verlötet oder auf sonst geeignete Weise verbunden ist, beispielsweise gasdicht verklebt ist.

Das bewegliche Glied 102 mit der geschilderten und erkennbaren Ausstattung in seinem Durchführungsbereich vermag nun sowohl eine rotierende, als auch – jedenfalls in einem gewissen Ausmaß – eine Axialbewegung auszuführen, ohne die Abdichtung der im Inneren der Isolierstoffkapselung 100 gelegenen Gasatmosphäre zu beeinträchtigen. Wesentlich hierbei ist das Flüssigdichtungsdepot, welches von der Nut 106 gebildet wird. Das darin enthaltene Flüssigdichtmittel 109 bewirkt die eigentliche Gasabdichtung, die O-Ring-Elemente 107 und 108 dienen demgegenüber in erster Linie der Verhinderung des Austrittes von Flüssigdichtmittel insbesondere bei Axialbewegungen des beweglichen Gliedes 102. Das Fettdepot dient aber vor allem der Gasabdichtung und der «elektrischen Abdichtung» des Innenraumes der Kapselung nach außen. Das Fettdepot verdeckt und isoliert praktisch die Innenkante der Metallkapselung 101. Betont sei aber in diesem Zusammenhang, daß die elektrische Dimensionierung so ausgelegt ist, daß die Spannungsfestigkeit auch ohne ein Fettdepot gegeben wäre, sie ist aber ein vorzügliches Gestaltungsmittel, welches eine erhebliche zusätzliche Sicherheit bei Schaltüberspannungen oder Blitzstoßspannungen bietet. Zu bemerken hierzu ist auch, daß bewegliche Glieder, welche in gekapselte Schaltanlagen eingeführt werden müssen, lediglich eine wartungsfreie Schaltspielzahl von mehreren hundert Betätigungen bis hin zu etwa 40 000 Betätigungsvorgängen bestehen müssen, nicht hingegen eine Schalthäufigkeit, wie sie bei den meisten Niederspannungsschaltgeräten oder bei mechanischen, häufig zu betätigenden Gliedern gefordert wird.

Die in der Fig. 1 gezeigten und genannten Durchführungen sowohl für das bewegliche Antriebsglied 21 als auch für die Betätigungsglieder 25 und 26 sind alle nach dem eben beschriebenen und in der Fig. 10 dargestellten Prinzip aufgebaut, wenn auch mit dem jeweiligen Bedarfsfall angepaßten Abmessungen.

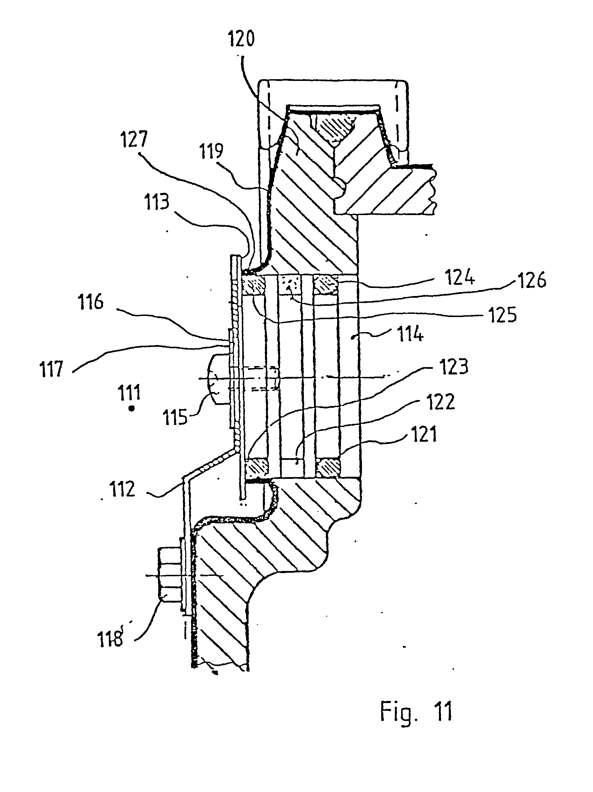

Schließlich zur Fig. 11, in welcher eine Überdrucksicherung 111 im Schnitt dargestellt ist. Sie gleicht im Prinzip den beweglichen Durchführungen gemäß Fig. 10, weist aber kein Betätigungsglied auf, sondern stattdessen ein federndes Halteglied 112 sowie eine metallische Tellerscheibe 113. Diese Teile sind nun mit einem Kolben 114 mittels einer Schraube 115 so verschraubt, daß zwischen dem Kopf der Schraube 115 und der zugekehrten Seite des Haltegliedes 112 so viel Spiel ist, daß eine gewisse Verschieblichkeit zwischen Kolben 114 und Halteglied 112 möglich ist, und zwar in kolbenradialer Richtung. Zu diesem Zweck weist das Halteglied 112 auch ein Langloch 116 auf, zu dessen Abdeckung eine Unterlegscheibe 117 dient. Übrigens ist das Halteglied 112 an seinem anderen Endbereich über eine Schraube 118 an dieser Schraubstelle starr mit einer Metallkapselung 119 und einem andeutungsweise gezeigten Isolierstoffteil 120 verbunden. Der Kolben 114 ist mit zwei Nuten 121 und 122 sowie einem Rücksprung 123 versehen. In der Nut 121 und im Rücksprung 123 sind nun O-Ring-Dichtelemente 124 und 125 angeordnet, die Nut 122 hingegen bildet ein Fettdepot 126. Zum O-Ring-Dichtelement 125 sei noch hinzugefügt, daß es sich außer an die gebildeten Eckwandungen des Rücksprungs 123 auch noch dichtend an einen ausgezogenen Kragen 127 sowie an die Randflächen der Tellerscheibe 113 preßt, da diese Tellerscheibe 113 vom Halteglied 112 mit einer Anpreßkraft beaufschlagt wird. Die Funktion dieser Überdrucksicherung ist folgende: im normalen Betriebsfall nimmt die Überdrucksicherung 111 die gezeigte Lage ein; bei einem geringen Überdruck über dem vorgesehenen Betriebsdruck innerhalb der Kapselung würde der Kolben 114 sich geringfügig aus seiner Lage entgegen der Federkraft des Haltegliedes 112 verschieben; beim Auftreten eines Störfalls mit sehr starkem Überdruck wird der Kolben 114 ganz aus der Zylinderöffnung im Isolierstoffteil 120 und dem Kragen 127 der Metallkapselung 119 herausspringen, ohne jedoch herunterzufallen oder gar «geschoßartig» in die Umgebung zu fliegen, da er nach wie vor vom Halteglied 112 gehalten wird.

**Patentansprüche**

1. Kapselung einer elektrischen Mittelspannungsschalt- und -verteileranlage, welche sich aus mehreren, druckdicht aneinandergefügten, vorzugsweise mit einem Isoliergas angefüllten, Isolierstoffteilen zusammensetzt und von einer geschlossenen metallischen Umhüllung umgeben ist, dadurch gekennzeichnet, daß die metallische Umhüllung der Isolierstoffteile aus einstückigen oder zusammengesetzten, beispielsweise halbschalenförmigen, Formteilen aus dünnwandigem, ziehfähigem Blech gebildet ist, welche nach erfolgter Montage der Anlage unmittelbar oder un-ter Zwischenfügung von Dichtmaterialien anein-ander stoßen und miteinander derart verbunden sind, daß sie die Isolierstoffteile gemeinsam gas- und wasserdampfdicht umschließen.

2. Kapselung nach Anspruch 1, dadurch gekennzeichnet, daß jedes der Isolierstoffteile (43, 54, 61, . . .) der Kapselung jeweils mit gesonderten Blechformteilen (44, 45, 51, 52; 55, 56) ausgestattet ist (Fig. 7, a bis f).

3. Kapselung nach Anspruch 1 oder 2, dadurch gekennzeichnet, daß zur Bildung der metallischen Umhüllung für einzelne Bereiche der Kapselung oder für die einzelnen Isolierstoffteile jeweils zwei gleiche oder zueinander spiegelbildliche halbschalenförmige Blechformteile zusammengefügt, gasdicht miteinander verbunden sind und eine der nachfolgenden Figurationen aufweisen, nämlich eine Kreuzform mit vier oder eine T-Form oder eine Hosenrohrform mit drei Anschlußöffnungen, eine geradlinige Rohrform, eine rechtwinkelige L-Form, eine stumpfwinkelig geknickte Form, eine Bogenform oder eine Omega-Form, jeweils mit zwei Anschlußöffnungen, oder eine Kappenform mit nur einer Anschlußöffnung, wobei die Querschnitte der genannten Figurationen in ihrem Ver-lauf auch Verjüngungen beziehungsweise Erwei-terungen aufweisen können (Fig. 6, Einzeldarstellungen a bis j und l).

4. Kapselung nach Anspruch 1 oder 2, dadurch gekennzeichnet, daß zur Bildung der metallischen Umhüllung für einzelne Bereiche der Kapselung oder für die einzelnen Isolierstoffteile jeweils zwei oder mehrere gleiche oder unterschiedliche, halbschalenförmige oder rohrförmige Blechform-teile zusammengefügt, gasdicht miteinander ver-bunden sind und die Figuration eines dreidimen-sionalen Doppelwinkels oder eine Kreuznagel-form aufweisen (Fig. 6, m und n).

5. Kapselung nach Anspruch 1 oder 2, dadurch gekennzeichnet, daß zur metallischen Umhüllung von Endbereichen der Kapselung einteilige oder aus halbschalenförmigen Blechformteilen zusammengefügte Kapselungselemente in Kappenform oder einteilige Blechformteile in einer Flanschdeckelform Verwendung finden (Fig. 6, h und k).

6. Kapselung nach einem der Ansprüche 1 bis 5, dadurch gekennzeichnet, daß ihre Isolierstoffteile und die diese umgebenden, einteiligen oder zusammengesetzten Blechformteile nach Art eines Verbundwerkstoffes wenigstens bereichsweise unlösbar miteinander verbunden sind.

7. Kapselung nach einem der Ansprüche 1 bis 5, dadurch gekennzeichnet, daß die Isolierstoffteile durch Ausschäumen der einzelnen Blechformteile oder einer vorher gasdicht miteinander verbundenen Gruppe von zwei oder mehreren Blechformteilen mit einem harten Strukturschaumstoff (zum Beispiel Polyurethan-Integral-Hartschaum) gebildet sind.

8. Kapselung nach einem der Ansprüche 1 bis 5, dadurch gekennzeichnet, daß die Isolierstoffteile durch Pulverbeschichtung, Spritzbeschichtung, Tauchharzbeschichtung oder Gießharzbeschichtung der zum Kapselungsinneren weisenden Seiten der einzelnen Blechformteile oder des Inneren einer vorher gasdicht miteinander verbundenen Gruppe von zwei oder mehreren Blechformteilen gebildet sind, wobei die Beschichtungsdicke vorzugsweise 1,5 bis 5 mm beträgt.

9. Kapselung nach einem der Ansprüche 1 bis 8, dadurch gekennzeichnet, daß zur gasdichten Verbindung zweier oder mehrerer, gemeinsam ein Isolierstoffteil (43, 54, 61 usw.) umgebender Blechformteile (44, 45; 51, 52; 55, 56; usw.) miteinander an deren zueinandergerichteten Blechformkanten flächig mittelbar oder unmittelbar aneinanderfügbare Abkantungen (46, 47; 68, 69) oder Bördelungen angeordnet oder Überlappungen vorgesehen sind (Fig. 7, a bis f).

10. Kapselung nach einem der Ansprüche 1 bis 9, dadurch gekennzeichnet, daß zur gasdichten Verbindung zweier oder mehrerer, gemeinsam ein Isolierstoffteil oder einen Bereich der Isolierstoffkapselung umgebender Blechformteile diese im Bereich ihrer Berührungsstellen (beispielsweise der aneinander fügbaren Abkantungen, Bördelungen oder Überlappungen gemäß Anspruch 9) miteinander gasdicht verschweißt, verlötet oder verklebt sind (Fig. 7, d, e, f).

11. Kapselung nach einem der Ansprüche 1 bis 9, dadurch gekennzeichnet, daß zur gasdichten Verbindung zweier oder mehrerer, gemeinsam ein Isolierstoffteil oder einen Bereich der Isolierstoffkapselung umgebender Blechformteile diese im Bereich ihrer Berührungsstellen (beispielswei-se der aneinanderfügbaren Abkantungen, Börde-lung oder Überlappungen gemäß Anspruch 9) – vorzugsweise unter Zwischenfügung eines Dichtungsmaterials, welches nur eingelegt ist oder auch eingeklebt sein kann – miteinander verklammert, vernietet oder verschraubt sind (Fig. 7, a, b, c).

12. Kapselung nach einem der Ansprüche 1 bis 11, dadurch gekennzeichnet, daß die Isolierstoffteile (77; 97) an ihren an ein benachbartes Isolierstoffteil (78; 98) anzufügenden Öffnungsrändern einen flanschartigen, sich nach außen hin erweiternden Kragen (79 an 77; 80 an 78) mit einem stufenartigen oder hohlkehlartigen umlaufenden Rücksprung (84, 85; 95, 96) an der äußeren Umlaufkante aufweisen, wobei der Rücksprung zusammen mit äußeren Rändern zugeordneter Blechformteile (81, 82) eine Einlegenut für ein Dichtungselement (86; 94) bildet (Fig. 8 und 9).

13. Kapselung nach Anspruch 12, dadurch gekennzeichnet, daß die stufenartigen oder hohlkehlartigen Rücksprünge (84, 85; 95, 96) aneinanderstoßender Isolierstoffteile (77, 78; 97, 98) zusammen mit den zueinander gerichteten Ränder der zugeordneten Blechformteile (81, 82) einen umlaufenden, wenigstens nahezu geschlossenen Kanal bilden, in welchem ein beiden Isolierstoffteilen gemeinsames Dichtungselement (86; 94) einlegbar ist, das seinerseits so in seinem Querschnitt geformt und bemessen ist, daß es sich in montierter Lage der Kapselung dichtend gegen randnahe Flächen beide benachbarten Blechformteile preßt (Fig. 8 und 9).

14. Kapselung nach einem der Ansprüche 1 bis 13, dadurch gekennzeichnet, daß die Isolierstoffteile (77; 97) an ihren an ein benachbartes Isolierstoffteil (78; 98) anzufügenden Öffnungsrändern, vorzugsweise nahe der flanschartigen Kragen (79, 80) gemäß Anspruch 12, senkrecht zur Öffnungsebene vorspringende Nocken (92) und/oder zurückspringende Ausnehmungen (93) aufweisen, wobei in montierter Lage der Isolierstoffteile die Nocken eines Isolierstoffteiles in Ausnehmungen des benachbarten Isolierstoffteiles eindringen und somit eine Verdrehsicherung der beiden Isolierstoffteile zueinander bilden (Fig. 8 und 9).

15. Kapselung nach Anspruch 14, dadurch gekennzeichnet, daß bei kreisförmigen Öffnungsrändern die Isolierstoffteile auf dem Umfang von durch die Mittelpunkte der Nocken (92) beziehungsweise Ausnehmungen (93) verlaufenden Teilkreisen eine größere Anzahl von Nocken beziehungsweise Ausnehmungen, regelmäßig verteilt, aufweisen, beispielsweise in Winkelabständen von 15, 30 oder 45 Winkelgraden.

16. Kapselung nach einem der Ansprüche 12 bis 15, dadurch gekennzeichnet, daß die nach außen hin sich erweiternden flanschartigen Kragen (79, 80) an den Isolierstoffteilen (77, 78) an ihrer vom anzugliedernden benachbarten Isolierstoffteil abgekehrten Flanschseite eine Konizität aufweisen, derart, daß diese Kragen einander benachbarter Isolierstoffteile in montierter Lage einen im Querschnitt trapezartigen, nach außen hin sich verjüngenden, umlaufenden und vorspringenden Rand bilden.

17. Kapselung nach Anspruch 12 oder 16, dadurch gekennzeichnet, daß zum Zusammenhalt einander benachbarter Isolierstoffteile deren umlaufende vorspringende Kragen (79, 80) von Spanngliedern (87; 99) insbesondere in Form von Rohrschellen oder vergleichbaren Elementen umgeben sind, welche in ihrem Querschnitt wenigstens teilweise dem gemeinsamen Querschnittsbild der vorspringenden Kragen einander benachbarter Isolierstoffteile angepaßt sind (Fig. 8 und 9).

18. Kapselung nach einem der Ansprüche 1 bis 17, dadurch gekennzeichnet, daß die Isolierstoffteile in ihr Inneres gerichtete Ausformungen zur Abstützung, Halterung oder Führung von im Isolierstoffteil-Inneren aufzunehmenden Funktionselementen oder zu diesen gehörigen Hilfselementen aufweisen.

19. Kapselung nach einem der Ansprüche 1 bis 18, dadurch gekennzeichnet, daß zur die Kapselung nicht beeinträchtigenden Durchführung eines beweglichen Teiles (102) durch die gesamte Kapselung (100 + 101) in das Innere eines Isolierstoffteiles dieses im Durchdringungsbereich eine Wandverdickung gegenüber den übrigen Wanddicken aufweist, daß im Durchdringungsbereich außerhalb des Isolierstoffteiles ein metallisches, mit der metallischen Umhüllung (101) am Stoßrand gasdicht verbundenes, innenzylindrisches Führungsteil (110) angrenzt, und daß im Längsbereich eines innenzylindrischen Führungsteiles zwischen dessen Innenwandung und dem zu bewegenden Teil oder einem dieses Teil dicht umgebenden Führungskolben (103) mindestens eine Ringdichtung (O-Ringe 107, 108) angeordnet ist (Fig. 10).

20. Kapselung nach Anspruch 19, dadurch gekennzeichnet, daß im Längsbereich des innenzylindrischen Führungsteiles (110) zwischen dessen Innenwand und dem zu bewegenden Teil oder einem dieses Teil (102) dicht umgebenden Führungskolben (103) mindestens eine Ringdichtung (107), zwischen dem zu bewegenden Teil beziehungsweise dessen Führungskolben und der umgebenden Öffnungswandung im Isolierstoffteil (100) mindestens eine weitere Ringdichtung (108) und zwischen diesen Ringdichtungen in demjenigen Längsbereich, in welchem das Isolierstoffteil an die metallische Umhüllung (101) und das daran befestigte innenzylindrische Führungsteil (110) grenzt, mindestens eine Flüssigdichtung oder Schmierdichtung (109) in einem das zu bewegende Teil umgebenden Kanaldepot (106) angeordnet sind (Fig. 10).

21. Kapselung nach Anspruch 20, dadurch gekennzeichnet, daß die Flüssigdichtung beziehungsweise Schmierdichtung (109) in einer um ein Mehrfaches breiteren als tiefen Radialnut (106) in einem das zu bewegende Teil im Durchführungsbereich umgebenden und mit dem zu bewegenden Teil fest und gasdicht verbundenen Führungskolben (103) angeordnet und so plaziert und in ihrer Breite bemessen ist, daß sie bei einer vorgesehenen Axialbewegung des zu bewegenden Teiles in jeder vorgesehenen Betätigungsstellung bis in das innenzylindrische Führungsteil hineinreicht (Fig. 10).

22. Kapselung nach Anspruch 20 oder 21, dadurch gekennzeichnet, daß die Flüssigdichtung beziehungsweise Schmierdichtung (109) von einer gelartigen oder pastösen Fett- oder Ölmasse gebildet ist.

23. Kapselung nach einem der Ansprüche 1 bis 22, dadurch gekennzeichnet, daß die metallische Umhüllung von einem tiefziehfähigen Edelstahlblech oder einem oberflächengeschützten (korrosionsgeschützten) Tiefziehstahlblech mit einer Wandstärke im Bereich von 0,5 bis 2 mm gebildet ist.

24. Kapselung nach einem der Ansprüche 1 bis 22, dadurch gekennzeichnet, daß die metallische Umhüllung von einem ziehfähigen Aluminiumblech mit einer Wandstärke im Bereich von 0,5 bis 2 mm gebildet ist.

25. Kapselung nach Anspruch 5, dadurch gekennzeichnet, daß bei Einsatz von Isolierstoffteilen (16) in Flanschdeckelform, wenigstens eines dieser Isolierstoffteile mit einem gasdicht darin angeordneten Sichtfenster (17) ausgestattet ist.

26. Kapselung nach einem der Ansprüche 1 bis 25, dadurch gekennzeichnet, daß zur Bildung einer Überdrucksicherung (111) in einem Wandbereich wenigstens eines der Isolierstoffteile (120) eine Öffnung mit einem darin axialbeweglich angeordneten Kolben (114) (vergleichbar dem Führungskolben gemäß den Ansprüchen 19 bis 21) ausgebildet ist, daß die gasdichte Abdichtung dieser Öffnung mittels mindestens einem O-Ring (124, 125) und einer Flüssigdichtung (126) analog den Ausgestaltungen der Ansprüche 19 bis 22 erfolgt, und daß die Halterung des Kolbens in seiner die Öffnung gasdicht verschließenden Lage mittels eines unter einer Vorspannung stehenden Federgliedes (112) erfolgt.

27. Kapselung nach Anspruch 26, dadurch gekennzeichnet, daß das Federglied (112) als vorzugsweise Z-förmige Blattfeder ausgebildet und sowohl mit dem Kolben (114) verschieblich aber unverlierbar verbunden (beispielsweise verschraubt), als auch am Isolierstoffteil (120) nahe der den Kolben umgebenden Öffnung befestigt (beispielsweise ebenfalls verschraubt) ist.

**Claims**

1. Enclosure of an electric medium-voltage switchgear and distribution system, which is made up of a plurality of parts of insulating material, joined to one another pressure-tightly, preferably filled with an insulating gas, and which is surrounded by a closed metal convering, characterized in that the metal covering of the parts of insulating material is formed by integral or combined, for example halfshell shaped, shaped parts of thin-walled, drawable sheet metal, which, after assembly of the system has been performed, butt against one another directly or with sealing materials interposed and are connected to one another in such a way that they enclose the parts of insulating material altogether gas-tightly and water vapour-tightly.

2. Enclosure according to Claim 1, characterized in that each of the parts of insulating material (43, 54, 61, ...) of the enclosure is in each case equipped with separate shaped parts of sheet metal (44, 45, 51, 52; 55, 56) (Fig. 7, a to f).

3. Enclosure according to Claim 1 or 2, characterized in that, for formation of the metal covering, two identical or mirror-symmetrical halfshell-shaped shaped parts of sheet metal are joined together and interconnected gas-tightly in each case for individual areas of the enclosure or for the individual parts of insulating material and have one of the following configurations, namely a cross shape with four or a T shape or a forked-pipe shape with three connecting openings, a straight pipe shape, a right-angled L shape, an obtusely angled bent shape, a bow shape or an omega shape, in each case with two connecting openings, or a cap shape with only one connecting opening, the cross-sections of the said configurations also being able to have tapered or widened profiles (Fig. 6, individual representations a to j and l).

4. Enclosure according to Claim 1 or 2, characterized in that, for formation of the metal covering, two or more identical or different halfshell-shaped or tubular-shaped parts of sheet metal are joined together and interconnected gas-tightly in each case for individual areas of the enclosure or for the individual parts of insulating material and have the configuration of a three-dimensional double angle or a lease pin shape (Fig. 6 m and n).

5. Enclosure according to Claim 1 or 2, characterized in that, for the metal covering of end areas of the enclosure, enclosure elements of one piece or joined together from halfshell-shaped shaped parts of sheet metal in cap shape or one-piece shaped parts of sheet metal in a flange cover shape are used (Fig. 6, h and k).

6. Enclosure according to one of Claims 1 to 5, characterized in that their parts of insulating material and the one-piece or combined shaped parts of sheet metal surrounding the latter are undetachably interconnected at least in certain areas in the manner of a composite material.

7. Enclosure according to one of Claims 1 to 5, characterized in that the parts of insulating material are formed by foam-filling of the individual shaped parts of sheet metal or a previously gas-tightly interconnected group of two or more shaped parts of sheet metal with a rigid structural foam (for example polyurethane integral rigid foam).

8. Enclosure according to one of Claims 1 to 5, characterized in that the parts of insulating material are formed by powder coating, spray coating, dip resin coating or casting resin coating of the sides of the individual shaped parts of sheet metal facing the inside of the enclosure or of the insides of a previously gas-tightly interconnected group of two or more shaped parts of sheet metal, the coating thickness preferably being 1.5 to 5 mm.

9. Enclosure according to one of Claims 1 to 8, characterized in that, for the gas-tight connection of two or more shaped parts of sheet metal (44, 45; 51, 52; 55, 56; etc), jointly surrounding a part of insulating material (43, 54, 61 etc), to one another, folded-over edges (46, 47; 68, 69) or beadings which can be joined to one another indirectly or directly over their surface area are arranged or overlaps are provided on their facing sheet metal edges (Fig. 7, a to f).

10. Enclosure according to one of Claims 1 to 9, characterized in that, for the gas-tight connection of two or more shaped parts of sheet metal, jointly surrounding a part of insulating material or an area of the insulating material enclosure, the said parts are gas-tightly welded, soldered or adhesively fixed to one another in the region of their contact points (for example of the folded-over edges, which can be joined to one another beadings or overlaps according to Claim 9) (Fig. 7, d, e, f).

11. Enclosure according to one of Claims 1 to 9, characterized in that, for the gas-tight connection of two or more shaped parts of sheet metal, jointly surrounding a part of insulating material or an area of the insulating material enclosure, the said parts are clamped, riveted or bolted to one another in the region of their contact points (for example of the folded-over edges which can be joined to one another, beading or overlaps according to Claim 9) – preferably with a sealing material interposed, which is only laid in place or may also be adhesively fixed in place – (Fig. 7, a, b, c).

12. Enclosure according to one of Claims 1 to 11, characterized in that the parts of insulating material (77; 97) have on the rims of their openings, to be joined to a neighbouring part of insulating material (78; 98), a flange-like, outwardly widening collar (79 on to 77; 80 on to 78) with a step-like or fillet-like encircling recess (84, 85; 95, 96) on the outer peripheral edge, the recess forming together with outer borders of assigned shaped parts of sheet metal (81, 82) an insertion groove for a sealing element (86; 94) (Figs. 8 and 9).

13. Enclosure according to Claim 12, characterized in that the step-like or fillet-like recesses (84, 84; 95, 96) of abutting parts of insulating material (77, 78; 97, 98) formed together with the mutually facing borders of the assigned shaped parts of sheet metal (81, 82) an encircling, at least virtually closed channel, in which a sealing element (86; 94) common to both parts of insulating material can be placed, which element for its part is shaped and dimensioned in its cross-section in such a way that, in the assembled position of the enclosure, it presses with a sealing effect against bordering surfaces of both neighbouring shaped parts of sheet metal (Figs. 8 and 9).

14. Enclosure according to one of Claims 1 to 13, characterized in that the parts of insulating material (77; 97) have on the rims of their openings, to be joined to a neighbouring part of insulating material (78; 98), preferably close to the flange-like collar (79, 80) according to Claim 12, cams (92) projecting perpendicularly to the plane of the opening and/or recessed clearances (93), the cams of one part of insulating material entering into clearances of the neighbouring part of insulating material, in the assembled position of the parts of insulating material, and thus forming a safeguard against relative twisting of the two parts of insulating material (Figs. 8 and 9).

15. Enclosure according to Claim 14, characterized in that, with circular opening rims, the parts of insulating material have on the circumference of pitch circles running through the centre point of the cams (92) or clearances (93) a considerable number of cams or clearances, regularly distributed, for example at angular spacings of 15, 30 or 45 degrees of angle.

16. Enclosure according to one of Claims 12 to 15, characterized in that the outwardly widening flange-like collar (79, 80) on the parts of insulating material (77, 78) have on their flange side remote from the neighbouring part of insulating material to be joined a conicity such that these collars of mutually neighbouring parts of insulating material form in assembled position a cross-sectionally trapezoidal, outwardly tapering encircling and projecting rim.

17. Enclosure according to Claim 12 or 16, characterized in that, to hold together mutually neighbouring parts of insulating material, their encircling, projecting collars (79, 80) are surrounded by clamping elements (87; 99), in particular in the form of pipe clips or comparable elements, which are adapted in their cross-section at least partially to the common cross-sectional appearance of the projecting collars of mutually neighbouring parts of insulating material (Figs. 8 and 9).

18. Enclosure according to one of Claims 1 to 17, characterized in that the parts of insulating material have formations directed into their insides for the supporting, holding or guidance of functional elements to be accommodated inside the part of insulating material or auxiliary elements belonging to these functional elements.

19. Enclosure according to one of Claims 1 to 18, characterized in that, for the leading of a movable part (102) through the entire enclosure (100 + 101) into the inside of a part of insulating material in such a way that the enclosure is not impaired, the said part has in the region of penetration a thickened portion of wall in comparison with the other wall thicknesses, in that, in the region of penetration there borders outside the part of insulating material a metal, inwardly cylindrical guide part (110), connected gas-tightly to the metal covering (101) at the abutting, and in that at least one ring seal (O-rings 107, 108) is arranged in the longitudinal region of this inwardly cylindrical guide part between its inner wall and the part to be moved or a guide piston (103) closely surrounding this part (Fig. 10).

20. Enclosure according to Claim 19, characterized in that at least one ring seal (107) is arranged in the longitudinal region of the inwardly cylindrical guide part (110) between its inner wall and the part to be moved or a guide piston (103) closely surrounding this part (102), at least one further ring seal (108) is arranged between the part to be moved or its guide piston and the surrounding wall of the opening in the part of insulating material (100), and at least one fluid seal or lubricating seal (109) is arranged in a channel relief (106), surrounding the part to be moved, between these ring seals in the longitudinal region in which the part of insulating material borders the metal covering (101) and the inwardly cylindrical guide part (110) fixed thereto (Fig. 10).

21. Enclosure according to Claim 20, characterized in that the fluid seal or lubricating seal (109) is arranged in a radial groove (106), which is many times wider than it is deep, in a guide piston (103) surrounding the part to be moved in the lead-through region and connected firmly and gas-tightly to the part to be moved, and is placed and dimensioned in its width in such a way that, in the event of an envisaged axial movement of the part to be moved in each envisaged operating position, it reaches into the inwardly cylindrical guide part (Fig. 10).

22. Enclosure according to Claim 20 or 21, characterized in that the fluid seal or lubricating seal (109) is formed by a gel-like or pasty grease or oil mass.

23. Enclosure according to one of Claims 1 to 22, characterized in that the metal covering is formed by a deep-drawable special steel sheet or a surface-protected (corrosion-protected) deep-drawn steel sheet having a wall thickness in the range from 0.5 to 2 mm.

24. Enclosure according to one of Claims 1 to 22, characterized in that the metal covering is formed by a drawable aluminium sheet having a wall thickness in the range from 0.5 to 2 mm.

25. Enclosure according to Claim 5, characterized in that, if parts of insulating material (16) in flange cover shape are used, at least one of these parts of insulating material is equipped with a viewing window (17) arranged gas-tightly therein.

26. Enclosure according to one of Claims 1 to 25, characterized in that, for the formation of a pressure relief device (111), an opening with a piston (114) arranged axially movably therein (comparable with the guide piston according to Claims 19 to 21), is made in a wall area of at least one of the parts of insulating material (120), in that the gas-tight seal of this opening takes place by means of at least one O-ring (124, 125) and a fluid seal (126) analogous to the arrangements of Claims 19 to 22, and in that the retention of the piston in its position closing the opening gas-tightly is performed by means of a spring element (112) under a pretension.

27. Enclosure according to Claim 26, characterized in that the spring element (112) is preferably designed as a Z-shaped leaf spring and is both connected (for example bolted) displaceably but captively to the piston (114) and is fixed (for example likewise bolted) to the part of insulating material (120) close to the opening surrounding the piston.

### Revendications

1. Blindage d'une installation de coupure et de distribution électrique moyenne tension, lequel se compose de plusieurs éléments en matériau isolant assemblés de façon étanche à la pression et de préférence remplis d'un gaz isolant, et est entouré d'une enveloppe métallique fermée, caractérisé par le fait que l'enveloppe métallique des éléments en matériau isolant est constituée par des préformés d'une seule ou en plusieurs pièces, par exemple en forme de demi-coquilles, en tôle mince emboutissable, qui, après le montage de l'installation, sont aboutés directement ou avec intercalation de matériaux étanches et mutuellement raccordés de manière à entourer ensemble les éléments en matériau isolant de façon étanche aux gaz et à la vapeur d'eau.

2. Blindage selon la revendication 1, caractérisé par le fait que chacun des éléments en matériau isolant (43, 54, 61, . . .) du blindage est respectivement muni de préformés séparés en tôle, (44, 45, 51, 52; 55, 56) (figures 7, a à f).

3. Blindage selon la revendication 1 ou 2, caractérisé par le fait que, pour former l'enveloppe métallique pour différentes zones du blindage ou pour les différents éléments en matériau isolant, à chaque fois deux préformés en tôle, identiques ou inversés l'un par rapport à l'autre et en forme de demi-coquilles, sont assemblés et mutuellement raccordés de façon étanche aux gaz et se présentent en l'une des configurations suivantes, à savoir: en forme de croix avec quatre ouvertures de raccordement, en forme de T ou de culotte avec trois ouvertures de raccordement, en forme de tube rectiligne, de L à angle droit, de tube brisé à angle obtus, en forme d'arc ou d'oméga, respectivement avec deux ouvertures de raccordement, ou en forme de capuchon avec seulement une ouverture de raccordement, les sections transversales des configurations précitées pouvant également présenter des amincissements ou des élargissements en certains endroits (figure 6, schémas individuels a à j et l).

4. Blindage selon la revendication 1 ou 2, caractérisé par le fait que, pour former l'enveloppe métallique pour différentes zones du blindage ou pour les différents éléments en matériau isolant, à chaque fois deux ou plusieurs préformés en tôle, identiques ou différents, en forme de demi-coquilles ou de tubes, sont assemblés et mutuellement raccordés de façon étanche aux gaz et se présentent sous la forme d'une double cornière tridimensionnelle ou d'un clou d'enverjure (figure 6 m et n).

5. Blindage selon la revendication 1 ou 2, caractérisé par le fait que pour l'enveloppe métallique des zones d'extrémité du blindage, on utilise des éléments de blindage en forme de capuchons d'une seule pièce ou composés de préformés en tôle en forme de demi-coquilles ou des préformés en tôle d'une seule pièce en forme de couvercle de bride (figure 6 h et k).

6. Blindage selon l'une des revendications 1 à 5, caractérisé par le fait que ses éléments en matériau isolant et les préformés en tôle d'une seule ou en plusieurs pièces les entourant sont mutuellement raccordés de façon indissociable au moins par zone à la manière d'un matériau composite.

7. Blindage selon l'une des revendications 1 à 5, caractérisé par le fait que les éléments en matériau isolant sont formés par recouvrement des différents préformés en tôle ou d'un groupe de deux ou de plusieurs préformés en tôle préalablement raccordés de façon étanche aux gaz par un produit d'un produit mousse dur à peau intégrée (par exemple mousse dure de polyuréthane – intégral).

8. Blindage selon l'une des revendications 1 à 5, caractérisé par le fait que les éléments en matériau isolant sont formés par revêtement par poudre, par enduction par pulvérisation, par enduction de résine, par immersion ou par enduction de résine de coulée, des faces, tournées vers l'intérieur du blindage, des différents préformés en tôle ou de l'intérieur d'un groupe de deux ou de plusieurs préformés en tôle préalablement raccordés de façon étanche aux gaz, l'épaisseur de l'enduction étant de préférence de 1,5 à 5 mm.

9. Blindage selon l'une des revendications 1 à 8, caractérisé par le fait que pour le raccordement étanche aux gaz de deux ou de plusieurs préformés en tôle (44, 45; 51, 52; 55, 56; etc.) entourant ensemble un élément en matériau isolant (43, 54, 61, etc.), on prévoit, au niveau de leurs arêtes dirigées les unes vers les autres des recouvrements ou bien des pliages (46, 47; 68, 69) ou des collets pouvant être assemblés directement ou indirectement par leurs surfaces (figures 7 a à f).

10. Blindage selon l'une des revendications 1 à 9, caractérisé par le fait que pour le raccordement étanche aux gaz de deux ou de plusieurs préformés en tôle entourant ensemble un élément en matériau isolant ou une zone du blindage en matériau isolant, ces préformés sont soudés, brasés ou collés les uns aux autres de façon étanche aux gaz dans la zone de leurs points de contacts (par exemple des pliages, des collets ou des recouvrements pouvant être mutuellement assemblés conformément à la revendication 9) (figures 7, d, e, f).

11. Blindage selon l'une des revendications 1 à 9, caractérisé par le fait que pour le raccordement étanche aux gaz de deux ou de plusieurs préformés en tôle entourant ensemble un élément en matériau isolant ou une zone du blindage en matériau isolant, ces préformés sont mutuellement agrafés, rivés ou vissés – de préférence avec intercalement d'un matériau étanche qui peut n'être qu'inséré ou également collé – dans la zone de leurs points de contact (par exemple des pliages, des collets ou des recouvrements pouvant être mutuellement assemblés conformément à la revendication 9) (figures 7, a, b, c).

12. Blindage selon l'une des revendications 1 à 11, caractérisé par le fait que les éléments en matériau isolant (77; 97), au niveau des bords de leurs ouvertures à assembler à un élément en matériau isolant voisin (78; 98), comportent un collet en forme de bride (79/77; 80/78) allant en s'élargissant vers l'extérieur et muni d'un retrait continu (84, 85; 95, 96) en forme de gradin ou de congé sur l'arête périphérique extérieure, le retrait, en liaison avec des bords extérieurs de préformés en tôle y associés (81, 82), formant une rainure pour l'insertion d'un élément d'étanchéité (86; 94) (figures 8 et 9).

13. Blindage selon la revendication 12, caractérisé par le fait que les retraits en forme de gradins ou de congés (84, 85; 95, 96) d'éléments en matériau isolant contigus (77, 78; 97, 98), en liaison avec les bords, dirigés l'un vers l'autre, des préformés en tôle y associés (81, 82), forment un canal périphérique au moins presque fermé dans lequel peut être inséré un élément d'étanchéité (86, 94) qui est commun aux deux éléments en matériau isolant et dont la section transversale est elle-même façonnée et dimensionnée de façon qu'en position montée du blindage, il vienne s'appuyer de façon étanche contre les surfaces, voisines du bord, des deux préformés en tôle voisins (figures 8 et 9).

14. Blindage selon l'une des revendications 1 à 13, caractérisé par le fait que les éléments en matériau isolant (77, 97) au niveau des bords de leurs ouvertures à assembler à un élément en matériau isolant voisin (78; 98), de préférence à proximité des collets (79, 80) en forme de brides conformément à la revendication 9, comportent des bossages (92) faisant saillie perpendiculairement au plan de l'ouverture et/ou des évidements (93) en retrait, les bossages d'un élément en matériau isolant, à la position montée des éléments en matériau isolant, s'engageant dans les évidements de l'élément en matériau isolant voisin et formant ainsi une sécurité empêchant toute possibilité de rotation des deux éléments en matériau isolant l'un par rapport à l'autre (figures 8 et 9).

15. Blindage selon la revendication 14, caractérisé par le fait qu'en cas de bords circulaires de leurs ouvertures, les éléments en matériau isolant comportent sur la périphérie de cercles partiels passant par les centres des bossages (92) ou des évidements (93), un assez grand nombre de bossages ou d'évidements, régulièrement répartis, par exemple à des distances angulaires de 15, 30 ou 45 degrés.

16. Blindage selon l'une des revendications 12 à 15, caractérisé par le fait que les collets en forme de brides (79, 80), allant en s'élargissant vers l'extérieur, des éléments en matériau isolant (77, 78), présentent sur leur face située du côté opposé à l'élément en matériau voisin à assembler une conicité telle que ces collets d'éléments en matériau isolant voisins forment à l'état monté un bord continu et en saillie de section transversale trapézoïdale allant en se rétrécissant vers l'extérieur.

17. Blindage selon la revendication 12 ou 16, caractérisé par le fait que, pour maintenir assemblés des éléments en matériau isolant voisins l'un de l'autre, leurs collets périphériques en saillie (79, 80) sont entourés par des organes de serrage (87; 99), en particulier en forme de colliers tubulaires ou autres éléments analogues, dont la section transversale est adaptée au moins en partie à la section transversale commune des collets en saillie d'éléments en matériau isolant voisins l'un de l'autre (figures 8 et 9).

18. Blindage selon l'une des revendications 1 à 17, caractérisé par le fait que les éléments en matériau isolant comportent des évidements dirigés vers l'intérieur pour le maintien, la fixation ou le guidage d'éléments fonctionnels, ou d'éléments auxiliaires appartenant à ceux-ci, à loger à l'intérieur de l'élément en matériau isolant.

19. Blindage selon l'une des revendications 1 à 18, caractérisé par le fait que pour le passage, sans nuire à l'intégralité du blindage, d'une pièce mobile (102) à travers la totalité du blindage (100 + 101) à l'intérieur d'un élément en matériau isolant, celui-ci, dans la zone de pénétration, présente un épaississement de la paroi par rapport à son épaisseur normale, que dans la zone de pénétration, à l'extérieur de l'élément en matériau isolant, est accolé un organe de guidage métallique (110) intérieurement cylindrique raccordé de façon étanche aux gaz à l'enveloppe métallique au niveau du bord jointif, et que dans la zone longitudinale de cet organe de guidage intérieurement cylindrique, au moins un joint annulaire (anneaux toriques 107, 108) est interposé entre la paroi interne de celui-ci et la pièce à déplacer ou un piston de guidage (103) entourant cette pièce de façon étanche (figure 10).

20. Blindage selon la revendication 19, caractérisé par le fait que dans la zone longitudinale de l'organe de guidage (110) intérieurement cylindrique, au moins un joint annulaire (107) est interposé entre la paroi interne de celui-ci et la pièce à déplacer ou un piston de guidage (103) entourant cette pièce (102) de façon étanche, qu'au moins un autre joint annulaire (108) est interposé entre la pièce à déplacer ou son piston de guidage et la paroi entourant l'ouverture de l'élément en matériau isolant (100) et qu'entre ces joints annulaires dans la zone longitudinale où l'élément en matériau isolant est contigu à l'enveloppe métallique (101) et à l'organe de guidage (110) intérieurement cylindrique qui est fixé dessus, au moins un joint à liquide ou un joint à graisse (109) est disposé dans un dépôt en forme de canal (106) entourant la pièce à déplacer (figure 10).

21. Blindage selon la revendication 20, caractérisé par le fait que le joint à liquide ou le joint à graisse (109) est placé dans une rainure radiale (106), d'un multiple plus large que profonde, d'un piston de guidage (103) entourant la pièce à déplacer dans la zone du passage et solidement raccordé de façon étanche aux gaz à la pièce à déplacer, et est disposé et dimensionné dans sa largeur de façon qu'il s'étende jusque dans l'organe de guidage intérieurement cylindrique en cas d'un déplacement axial donné de la pièce à déplacer dans chaque position d'actionnement prévu (figure 10).

22. Blindage selon la revendication 20 ou 21, caractérisé par le fait que le joint à liquide ou le joint à graisse (109) est formé par une masse de graisse ou d'huile gélatineuse ou pâteuse.

23. Blindage selon l'une des revendications 1 à 22, caractérisé par le fait que l'enveloppe métallique est formée par une tôle en acier spécial emboutissable ou par une tôle d'acier emboutissable à surface protégée (protégée contre la corrosion) d'une épaisseur de l'ordre de 0,5 à 2 mm.

24. Blindage selon l'une des revendications 1 à 22, caractérisé par le fait que l'enveloppe métallique est formée par une tôle d'aluminium emboutissable d'une épaisseur de l'ordre de 0,5 à 2 mm.

25. Blindage selon la revendication 5, caractérisé par le fait que jusqu'à l'installation d'éléments (16) en matériau isolant en forme de couvercle de brides au moins l'un de ces éléments en matériau isolant est muni d'un voyant (17) disposé de façon étanche à l'intérieur.

26. Blindage selon l'une des revendications 1 à 25, caractérisé par le fait que pour assurer une protection (111) contre les surpressions, dans une zone de parois, d'au moins l'un des éléments en matériau isolant (120) est pratiquée comporte une ouverture munie d'un piston (114) pouvant se déplacer axialement à l'intérieur (comparable aux pistons de guidage selon les revendications 19 à 21), que l'étanchéité aux gaz de cette ouverture est assurée par au moins un anneau torique (124, 125) et un joint à liquide (126) analogue aux modes de réalisation des revendications 19 à 22, et que le maintien du piston à sa position fermant l'ouverture de façon étanche aux gaz est assuré par un organe élastique (112) soumis à une précontrainte.

27. Blindage selon la revendication 26, caractérisé par le fait que l'organe élastique (112) est de préférence réalisé sous la forme d'une lame de ressort en forme de Z et est raccordé (par exemple vissé) de façon déplaçable mais imperdable au piston (114) et est fixé (par exemple également vissé) sur l'élément en matériau isolant (120) à proximité de l'ouverture entourant le piston.

Fig. 1

Fig. 2

Fig. 3

Fig. 4

Fig. 5

a

b

c

d

f

e

g

h

i

k

l

m

Fig. 6

n

Einzelheit
bei A

a

b

c

d

e

f

Fig. 7

Fig. 10

Fig. 8

Fig. 9

Fig. 11